# FASCICULE DE BREVET EUROPEEN

(11) **EP 3 873 863 B1**
(45) Date de publication et mention de la délivrance du brevet: **18.09.2024**
(21) Numéro de dépôt: 19813096.5
(22) Date de dépôt: 23.10.2019
(51) Int. Cl.: C03C 17/36

(54) **MATERIAU COMPRENANT UN SUBSTRAT MUNI D'UN EMPILEMENT DE COUCHES MINCES A PROPRIETES THERMIQUES**
MATERIAL MIT EINEM SUBSTRAT VERSEHEN MIT EINEM STAPEL AUS DÜNNSCHICHTEN MIT THERMISCHEN EIGENSCHAFTEN
MATERIAL COMPRISING A SUBSTRATE PROVIDED WITH A STACK OF THIN LAYERS WITH THERMAL PROPERTIES

(30) Priorité: 30.10.2018 FR 1860048
(43) Date de publication de la demande: 08.09.2021
(73) Titulaire: Saint-Gobain Glass France, 92400 Courbevoie (FR)
(72) Inventeur: JACQUET, Paul, 93500 PANTIN (FR); WANAKULE, Nisita, 75019 PARIS (FR); JEAN, Cyril, 75020 PARIS (FR); CAILLET, Xavier, 94120 FONTENAY SOUS BOIS (FR); RONDEAU, Véronique, 92600 ASNIERES SUR SEINE (FR)
(74) Mandataire: Saint-Gobain Recherche
(86) Numéro de dépôt international: PCT/FR2019/052524
(87) Numéro de publication internationale: WO 2020/089545

(56) Documents cités:
- EP-A1- 2 661 417
- WO-A1-2017/006027
- WO-A1-2019/086784
- FR-A1- 3 005 048

## Description

L'invention concerne un matériau, tel qu'un vitrage, comprenant un substrat transparent revêtu d'un empilement de couches minces comprenant plusieurs couches fonctionnelles pouvant agir sur le rayonnement solaire et/ou le rayonnement infrarouge. L'invention concerne également les vitrages comprenant ces matériaux ainsi que l'utilisation de tels matériaux pour fabriquer des vitrages d'isolation thermique et/ou de protection solaire.

Ces vitrages peuvent être destinés aussi bien à équiper les bâtiments que les véhicules, en vue notamment de diminuer l'effort de climatisation et/ou d'empêcher une surchauffe excessive, vitrages dits « de contrôle solaire » et/ou diminuer la quantité d'énergie dissipée vers l'extérieur, vitrages dits « bas émissifs » entraînée par l'importance toujours croissante des surfaces vitrées dans les bâtiments et les habitacles de véhicules.

Selon les climats des pays où sont installés ces vitrages, les performances en termes de transmission lumineuse et de facteur solaire recherchées peuvent varier dans une certaine gamme. La transmission lumineuse doit être suffisamment faible pour supprimer l'éblouissement et suffisamment élevée pour que la diminution de la quantité de lumière pénétrant à l'intérieur de l'espace délimité par ledit vitrage ne rende pas obligatoire l'utilisation de la lumière artificielle. Par exemple, dans les pays où les niveaux d'ensoleillement sont élevés, il existe une demande forte de vitrage présentant une transmission lumineuse de l'ordre de 50 %, pour des valeurs de facteur solaire basses, typiquement inférieures ou égales à 30 %, c'est-à-dire dont la sélectivité est de l'ordre de 1,8 ou légèrement supérieure pour un double vitrage et avec l'empilement de couches minces en face 2.

Des vitrages comprenant des substrats transparents revêtus d'un empilement de couches minces comprenant trois couches fonctionnelles métalliques, chacune disposée entre deux revêtements diélectriques ont été proposés afin d'améliorer la protection solaire tout en conservant une transmission lumineuse suffisante. Ces empilements sont généralement obtenus par une succession de dépôts effectués par pulvérisation cathodique éventuellement assistée par champ magnétique. Ces vitrages sont qualifiés de sélectifs car ils permettent :
- de diminuer la quantité d'énergie solaire pénétrant à l'intérieur des bâtiments en présentant un faible facteur solaire (FS ou g),
- de garantir une transmission lumineuse suffisante,
- de présenter une faible émissivité pour réduire la déperdition de chaleur par le rayonnement infrarouge de grande longueur d'onde.

Selon l'invention, on entend par :
- facteur solaire « g », le rapport en pourcentage entre l'énergie totale entrant dans le local à travers le vitrage et l'énergie solaire incidente,
- sélectivité « S », le rapport entre la transmission lumineuse et le facteur solaire TL/g.

Des matériaux de l'art antérieur permettent d'obtenir des valeurs de transmission lumineuse, de facteur solaire, de réflexion extérieure et d'émissivité dans des gammes recherchées. Cependant, l'aspect esthétique de vitrages incorporant de tels matériaux ne donnent pas entière satisfaction et présentent notamment les inconvénients suivants : la réflexion extérieure est trop basse et/ou la réflexion intérieure est trop élevée ; la différence entre la réflexion extérieure et la réflexion intérieure est trop basse.

Ainsi, il existe un besoin pour des vitrages présentant une transmission lumineuse TL faible de l'ordre de 50 % (comprise entre 40,0 % et 55,0 %, en incluant ces valeurs), avec une réflexion extérieure Re élevée, de l'ordre d'au moins 27,0 % (comprise entre 27,0 % et 35,0 %, en incluant ces valeurs) et une réflexion intérieure Ri basse, de l'ordre de 20,0 % ou moins (comprise entre 5,0 % et 20,0 %, en incluant ces valeurs), avec une sélectivité S ≥ 1,5 voire S ≥ 1,8 (notamment une sélectivité de l'ordre de 1,5 pour un double vitrage avec un empilement de couche minces en face 3 ou une sélectivité S de l'ordre de 1,8 pour un double vitrage avec un empilement de couche minces en face 2).

Un objectif de l'invention est de proposer un matériau qui réponde, au moins en partie, à ces besoins et dans une version préférée à la totalité de ces besoins ; en particulier pour un double vitrage comprenant un matériau selon l'invention.

La complexité des empilements comprenant trois couches fonctionnelles rend difficile l'amélioration combinée de ces caractéristiques optiques sans nuire aux performances de contrôle solaire.

Un problème technique proche a déjà été évoqué dans la demande internationale de brevet N° WO 2017/006029 A1. On y décrit un empilement comprenant trois couches fonctionnelles en argent, le double vitrage incorporant cet empilement présentant une transmission lumineuse élevée, de l'ordre de 70 % et un facteur solaire de l'ordre de 34 %, la sélectivité étant de l'ordre de 2. Selon l'enseignement de cette publication chaque revêtement diélectrique comprend au moins une couche diélectrique haut indice dont l'indice de réfraction est d'au moins 2,15 et dont l'épaisseur optique supérieure à 20 nm.

La demande internationale de brevet N° WO 2011/147875 décrit quant à elle des empilements comprenant trois couches fonctionnelles en argent dans lesquels la deuxième couche fonctionnelle présente une épaisseur physique (géométrique) inférieure à celle des autres couches fonctionnelles. Cette demande ne décrit cependant pas de vitrages présentant les propriétés optiques recherchées, comme expliqué précédemment.

L'art antérieur connaît en particulier de la demande internationale de brevet N° WO 2014/125083 des exemples de matériaux à trois couches fonctionnelles métalliques, en particulier les exemples 11 et 53 de ce document, avec de la matière absorbante uniquement entre la première couche fonctionnelle métallique et la deuxième couche fonctionnelle métallique. Ces exemples présentent, une fois montés en double vitrage, une sélectivité élevée, de l'ordre de 1,9 et une transmission lumineuse faible de l'ordre de 51% (cf. Tableau 8 de ce document) ; la réflexion intérieure est également faible, de l'ordre de 10 à 11 % mais la réflexion extérieure est beaucoup trop faible car inférieure à 10 %.

Les documents WO 2017/006027 A1 et FR 3 005 048 A1 décrivent des matériaux comportant trois couches fonctionnelles métalliques.

Les inventeurs ont découvert de manière surprenante qu'en sélectionnant des épaisseurs particulières de couches absorbantes à l'intérieur de l'empilement il était possible de réaliser un vitrage présentant à la fois une réflexion extérieure élevée et une réflexion intérieure faible, avec une différence marquée entre la réflexion extérieure et la réflexion intérieure, de l'ordre de 10 % (entre 8 % et 12%).

La présente invention repose sur l'utilisation d'un empilement à au moins trois couches fonctionnelles métalliques (voir d'un empilement à exactement trois couches fonctionnelles métalliques) qui présente une épaisseur relativement importante de couche absorbante entre la première et la deuxième couche fonctionnelle métallique et/ou entre la deuxième et la troisième couche fonctionnelle métallique, mais qui présente une épaisseur relativement faible de couche absorbante entre la face du substrat et la première couche fonctionnelle métallique et au-dessus de la dernière couche fonctionnelle métallique.

L'invention a d'abord pour objet un matériau comprenant un substrat transparent revêtu sur une face d'un empilement de couches minces selon la revendication 1. Cet empilement comporte successivement à partir de ladite face une alternance :
- de trois couches métalliques fonctionnelles à base d'argent dénommées en partant du substrat première couche fonctionnelle Ag1, deuxième couche fonctionnelle Ag2 et troisième couche fonctionnelle Ag3, d'épaisseurs physiques respectivement Ea1, Ea2, Ea3, et
- de quatre revêtements diélectriques dénommés en partant de ladite face du substrat M1, M2, M3 et M4, d'épaisseurs optiques respectivement Eo1, Eo2, Eo3, Eo4, chaque revêtement diélectrique comportant une couche diélectrique ou un ensemble diélectrique de couches,
   de manière à ce que chaque couche métallique fonctionnelle soit disposée entre deux revêtements diélectriques,
   ledit matériau étant remarquable en ce que :
      - de la matière absorbante est présente entre ladite première couche fonctionnelle Ag1 et ladite deuxième couche fonctionnelle Ag2, en une épaisseur totale Abs2 telle que 1,0 ≤ Abs2 ≤ 5,0 nm et/ou de la matière absorbante est présente entre ladite deuxième couche fonctionnelle Ag2 et ladite troisième couche fonctionnelle Ag3, en une épaisseur totale Abs3 telle que 1,0 ≤ Abs3 ≤ 5,0 nm ;
      - de la matière absorbante est présente entre ladite face du substrat et ladite première couche fonctionnelle Ag1 en une épaisseur totale Abs1 telle que 0,0 < Abs1 ≤ 0,5 nm et de la matière absorbante est présente au-dessus de ladite troisième couche fonctionnelle Ag3, en une épaisseur totale Abs4 telle que 0,0 < Abs4 ≤ 0,5 nm.

Ainsi, de la matière absorbante est présente en relativement grande épaisseur entre la première et la deuxième couche fonctionnelle et/ou entre la deuxième et la troisième couche fonctionnelle alors qu'elle est présente en relativement petite épaisseur sous la première couche fonctionnelle et au-dessus de la troisième couche fonctionnelle ; c'est cette distribution particulière de la matière absorbante qui permet d'obtenir un vitrage présentant à la fois une transmission lumineuse faible de l'ordre de 50 %, une réflexion extérieure Re élevée, de l'ordre d'au moins 27 % et une réflexion intérieure Ri basse, de l'ordre de 20 % ou moins.

Dans une variante, lorsque la matière absorbante est présente entre ladite première couche fonctionnelle Ag1 et ladite deuxième couche fonctionnelle Ag2, en une épaisseur totale Abs2 telle que 1,0 ≤ Abs2 ≤ 5,0 nm alors la matière absorbante qui est présente entre ladite deuxième couche fonctionnelle Ag2 et ladite troisième couche fonctionnelle Ag3 peut être telle que 0,0 < Abs3 < 1,0 nm.

Dans une autre variante,, lorsque la matière absorbante est présente entre ladite deuxième couche fonctionnelle Ag2 et ladite troisième couche fonctionnelle Ag3, en une épaisseur totale Abs3 telle que 1,0 ≤ Abs3 ≤ 5,0 nm alors la matière absorbante qui est présente entre ladite première couche fonctionnelle Ag1 et ladite deuxième couche fonctionnelle Ag2 peut être telle que 0,0 < Abs2 < 1,0 nm.

De préférence, la matière absorbante qui est présente entre ladite face du substrat et ladite première couche fonctionnelle Ag1 est telle que 0,0 < Abs1 ≤ 0,3 nm.

De préférence, la matière absorbante qui est présente au-dessus de ladite troisième couche fonctionnelle Ag3 est telle que 0,0 < Abs4 ≤ 0,3 nm.

Par « revêtement » au sens de la présente invention, il faut comprendre qu'il peut y avoir une seule couche ou plusieurs couches de matériaux différents à l'intérieur du revêtement. Par « revêtement diélectrique », il faut donc comprendre qu'il peut y avoir une seule couche diélectrique ou plusieurs couches diélectriques de matériaux différents à l'intérieur du revêtement diélectrique.

Comme habituellement, par « couche diélectrique » au sens de la présente invention, il faut comprendre que du point de vue de sa nature, le matériau est « non métallique », c'est-à-dire n'est pas un métal. Dans le contexte de l'invention, ce terme désigne un matériau présentant un rapport n/k à la valeur habituelle de longueur d'onde dans le visible de 550 nm qui est égal ou supérieur à 5,0.

Par « matière absorbante » au sens de la présente invention, il faut comprendre qu'une couche de matière absorbante, ou que chaque couche de matière absorbante, dans l'endroit considéré, est un matériau présentant un rapport n/k à la valeur habituelle de longueur d'onde dans le visible de 550 nm qui est entre 0,0 et 5,0 en excluant ces valeurs et en excluant que ce matériau constituant la couche considérée soit à base d'argent (car la couche considérée ne peut pas être une couche fonctionnelle métallique au sens de l'invention).

Il est rappelé que n désigne l'indice de réfraction réel du matériau à une longueur d'onde donnée et k représente la partie imaginaire de l'indice de réfraction à une longueur d'onde donnée ; le rapport n/k est calculé ici à la longueur d'onde donnée identique pour n et pour k de 550 nm.

La matière absorbante peut être choisie parmi : un alliage à l'état métallique comprenant du nickel et du chrome voire un alliage à l'état métallique de nickel et de chrome, un nitrure comprenant du nickel et du chrome voire un nitrure de nickel et de chrome, un nitrure de titane, un nitrure de niobium, un nitrure comprenant du zinc et de l'étain voire un nitrure de zinc et d'étain.

Par « matière absorbante métallique » ou « à l'état métallique » au sens de la présente invention, il faut comprendre que la matière est absorbante comme indiquée ci-avant et qu'elle ne comporte pas d'atome d'oxygène, ni d'atome d'azote.

L'invention permet ainsi d'atteindre les performances optiques, thermiques, la transparence et l'aspect esthétique qui sont recherchés, comme expliqué précédemment.

En ajustant les épaisseurs des couches absorbantes comme indiqué, la transparence du vitrage peut être contrôlée de façon à obtenir des valeurs de transmission lumineuse T_{L} de l'ordre de 50 %, gamme adaptée tout particulièrement pour les vitrages destinés à être utilisés dans des régions à fort ensoleillement. Selon un avantage majeur de l'invention, l'obtention de l'aspect visuel satisfaisant, avec une réflexion extérieure relativement élevée et une réflexion intérieure relativement faible.

On donne ci-après d'une manière alternative ou cumulative certains modes de réalisation préférés mais non limitatifs de la présente invention :
- l'épaisseur physique Ea1 et Ea2 respectivement de ladite première et de ladite deuxième couche fonctionnelle Ag1, Ag2 est chacune comprise entre 7,0 et 12,0 nm et l'épaisseur physique Ea3 de ladite troisième couche fonctionnelle Ag3 est comprise entre 13,0 et 16,0 nm ;
- ladite matière absorbante présente entre ladite première couche fonctionnelle Ag1 et ladite deuxième couche fonctionnelle Ag2 est présente au contact de ladite couche fonctionnelle Ag2, avec au moins la moitié, et de préférence la totalité, de ladite épaisseur totale Abs2 au contact de ladite couche fonctionnelle Ag2 ; Cette possibilité est particulièrement avantageuse car il est plus simple de prévoir une couche de blocage épaisse que de prévoir une couche supplémentaire absorbante à l'intérieur d'un revêtement diélectrique ;
- ladite matière absorbante présente entre ladite deuxième couche fonctionnelle Ag2 et ladite troisième couche fonctionnelle Ag3 est présente au contact de ladite couche fonctionnelle Ag2, avec au moins la moitié, et de préférence la totalité, de ladite épaisseur totale Abs3 située au contact de ladite couche fonctionnelle Ag2 ; Cette possibilité est particulièrement avantageuse car il est plus simple de prévoir une couche de blocage épaisse que de prévoir une couche supplémentaire absorbante à l'intérieur d'un revêtement diélectrique ;
- ledit premier revêtement diélectrique M1, et de préférence uniquement ce premier revêtement diélectrique M1, comporte une couche haut indice, présentant un indice de réfraction à 550 nm qui est d'au moins 2,15, et présentant une épaisseur optique Eo₁₂ comprise entre 10,0 et 40,0 nm ;
- ledit premier revêtement diélectrique M1 présente une épaisseur optique Eo1 comprise entre 130,0 et 160,0 nm ;
- ledit deuxième revêtement diélectrique M2 présente une épaisseur optique Eo2 comprise entre 80,0 et 100,0 nm ;
- ledit troisième revêtement diélectrique M3 présente une épaisseur optique Eo3 comprise entre 140,0 et 180,0 nm ;
- ledit quatrième revêtement diélectrique M4 présente une épaisseur optique Eo4 comprise entre 50,0 et 90,0 nm ;
- le rapport de l'épaisseur optique Eo2 dudit deuxième revêtement diélectrique M2 sur l'épaisseur optique Eo1 dudit premier revêtement diélectrique M1 est d'une part égal ou supérieur à 0,4 et d'autre part inférieur ou égal à 0,9 ;
- le rapport de l'épaisseur optique Eo1 dudit premier revêtement diélectrique M1 sur l'épaisseur optique Eo4 dudit quatrième revêtement diélectrique M4 est supérieur à 1,5, voire supérieur à 1,8, voire supérieur à 2,0 ; cette épaisseur optique Eo4 dudit quatrième revêtement diélectrique M4 relativement faible par rapport à l'épaisseur optique Eo1 dudit premier revêtement diélectrique est particulièrement avantageuse pour obtenir une réflexion extérieur du vitrage qui est élevée ;
- le rapport de l'épaisseur optique Eo3 dudit troisième revêtement diélectrique M3 sur l'épaisseur optique Eo1 dudit premier revêtement diélectrique M1 est compris entre 0,9 et 1,1.

L'empilement de couches minces peut comporter successivement à partir de ladite face une alternance :
- de uniquement trois couches métalliques fonctionnelles à base d'argent dénommées en partant du première couche fonctionnelle Ag1, deuxième couche fonctionnelle Ag2 et troisième couche fonctionnelle Ag3, d'épaisseurs physiques respectivement Ea1, Ea2, Ea3, et
- de uniquement quatre revêtements diélectriques dénommés en partant de ladite face du substrat M1, M2, M3 et M4, d'épaisseurs optiques respectivement Eo1, Eo2, Eo3, Eo4, chaque revêtement diélectrique comportant une couche diélectrique ou un ensemble diélectrique de couches,
de manière à ce que chaque couche métallique fonctionnelle soit disposée entre deux revêtements diélectriques.

Lesdites trois couches métalliques fonctionnelles à base d'argent peuvent être des couches métalliques fonctionnelles en argent.

L'empilement peut comprendre, ou être constituée de, en partant du substrat transparent :
- un premier revêtement diélectrique M1 comprenant de préférence au moins une couche diélectrique à fonction barrière et une couche diélectrique à fonction stabilisante,
- éventuellement une couche de blocage,
- une première couche fonctionnelle Ag1,
- éventuellement une couche de blocage,
- un deuxième revêtement diélectrique M2 comprenant de préférence au moins un couche diélectrique à fonction stabilisante inférieure, une couche diélectrique à fonction barrière et une couche diélectrique à fonction stabilisante supérieure,
- éventuellement une couche de blocage,
- une deuxième couche fonctionnelle Ag2,
- éventuellement une couche de blocage,
- un troisième revêtement diélectrique M3 comprenant de préférence au moins un couche diélectrique à fonction stabilisante inférieure, une couche diélectrique à fonction barrière et une couche diélectrique à fonction stabilisante supérieure,
- éventuellement une couche de blocage,
- une troisième couche fonctionnelle Ag3,
- éventuellement une couche de blocage,
- un quatrième revêtement diélectrique M4 comprenant de préférence au moins une couche diélectrique à fonction stabilisante, une couche diélectrique à fonction barrière et éventuellement une couche de protection.

L'invention se rapporte en outre à un vitrage comprenant au moins un matériau tel que décrit précédemment. Un tel vitrage peut être sous forme de vitrage monolithique, feuilleté ou multiple et notamment un double vitrage ou un triple vitrage.

Un revêtement diélectrique au sens de l'invention peut comporter une, voire plusieurs, couche absorbante, métallique ou nitrurée ; mais cette couche ne peut pas constituer une métallique fonctionnelle à base d'argent car cette dernière est de type « réfléchissant » et non « absorbant ».

Toutes les caractéristiques lumineuses présentées dans la description sont obtenues selon les principes et méthodes décrits dans la norme européenne EN 410 se rapportant à la détermination des caractéristiques lumineuses et solaires des vitrages utilisés dans le verre pour la construction.

De manière conventionnelle, les indices de réfraction et les coefficients d'absorption sont mesurés à une longueur d'onde de 550 nm. Les facteurs de transmission lumineuse T_{L} et de réflexion lumineuse R_{L} sont mesurés sous l'illuminant D65 avec un champ de vision de 2°.

Sauf indication contraire, toutes les valeurs et gammes de valeurs des caractéristiques optiques et thermiques sont données pour un vitrage double constitué de substrats clairs de type verre sodo-calcique ordinaire dont un premier substrat de 6 mm portant l'empilement de couches minces, d'un espace intercalaire de 16 mm rempli d'argon à raison de 90 % et d'air à raison de 10 % et d'un autre substrat clair également de type verre sodo-calcique, non-revêtu, d'une épaisseur de 4 mm. Le premier substrat revêtu est placé dans le double vitrage de sorte que l'empilement de couches minces se trouve en face 2 dudit vitrage. La réflexion lumineuse extérieure R_{Lext}, ou Re, du double vitrage est mesurée du côté du premier substrat, tandis que la réflexion R_{Lint}, ou Ri, du double vitrage est mesurée du côté du second substrat (ne comprenant pas d'empilement).

Sauf mention contraire, les épaisseurs évoquées dans le présent document sans autres précisions sont des épaisseurs physiques, ou encore réelles ou géométriques, dénommées Ep et sont exprimées en nanomètres. A contrario, une épaisseur optique Eo d'une couche ou d'un ensemble de couches est définie comme l'épaisseur physique de la couche considérée multipliée par son indice de réfraction (n) à la longueur d'onde de 550 nm : Eo = n₅₅₀ × Ep. L'indice de réfraction étant une valeur adimensionnelle, on peut considérer que l'unité de l'épaisseur optique est la même que celle choisie pour l'épaisseur physique. Dans la présente description l'unité choisie pour les épaisseurs est le nanomètre, sauf indication contraire. Si un revêtement diélectrique est composé de plusieurs couches diélectriques, l'épaisseur optique du revêtement diélectrique correspond à la somme des épaisseurs optiques des différentes couches diélectriques constituant le revêtement diélectrique.

Dans toute la description le substrat selon l'invention est considéré posé horizontalement. L'empilement de couches minces est déposé au-dessus et au contact du substrat. Le sens des expressions « au-dessus » et « en-dessous » et « inférieur » et « supérieur » est à considérer par rapport à cette orientation. A défaut de stipulation spécifique, les expressions « au-dessus » et « en-dessous » ne signifient pas nécessairement que deux couches et/ou revêtements sont disposés au contact l'un de l'autre. Lorsqu'il est précisé qu'une couche est déposée « au contact » d'une autre couche ou d'un revêtement, cela signifie qu'il ne peut y avoir une (ou plusieurs) couche(s) intercalée(s) entre ces deux couches (ou couche et revêtement).

Au sens de la présente invention, les qualifications « première », « deuxième », « troisième » et « quatrième » pour les couches fonctionnelles ou les revêtements diélectriques sont définies en partant du substrat porteur de l'empilement et en se référant aux couches ou revêtements de même fonction. Par exemple, la couche fonctionnelle la plus proche du substrat est la première couche fonctionnelle, la suivante en s'éloignant du substrat est la deuxième couche fonctionnelle, etc.

Comme indiqué précédemment, l'invention concerne également un vitrage comprenant un matériau selon l'invention. De manière conventionnelle, les faces d'un vitrage sont désignées à partir de l'extérieur du bâtiment et en numérotant les faces des substrats de l'extérieur vers l'intérieur de l'habitacle ou du local qu'il équipe. Cela signifie que la lumière solaire incidente traverse les faces dans l'ordre croissant de leur numéro.

L'empilement est de préférence positionné dans le vitrage de sorte que la lumière incidente provenant de l'extérieur traverse le premier revêtement diélectrique avant de traverser la première couche métallique fonctionnelle. L'empilement n'est pas déposé sur la face du substrat définissant la paroi extérieure du vitrage mais sur la face intérieure de ce substrat. L'empilement est donc avantageusement positionné en face 2, la face 1 du vitrage étant la face la plus à l'extérieur du vitrage, comme habituellement.

En choisissant de monter de cette façon le vitrage, le premier revêtement diélectrique (M1) est situé entre l'extérieur et toutes les couches fonctionnelles à base d'argent de l'empilement.

De préférence, l'empilement est déposé par pulvérisation cathodique assistée par un champ magnétique (procédé magnétron). Selon ce mode de réalisation avantageux, toutes les couches de l'empilement sont déposées par pulvérisation cathodique assistée par un champ magnétique.

L'invention concerne également le procédé d'obtention d'un matériau selon l'invention, dans lequel on dépose les couches de l'empilement par pulvérisation cathodique magnétron.

Les couches fonctionnelles métalliques à base d'argent comprennent au moins 95,0 %, de préférence au moins 96,5 % et mieux au moins 98,0 % en masse d'argent par rapport à la masse de la couche fonctionnelle. De préférence, la couche métallique fonctionnelle à base d'argent comprend moins de 1,0 % en masse de métaux autres que de l'argent par rapport à la masse de la couche métallique fonctionnelle à base d'argent.

L'empilement peut comprendre en outre au moins une couche de protection supérieure, notamment à base de TiZr (c'est-à-dire comprenant du Ti et du Zr), et notamment à base de TiZrO, ou à base de TiZrN, ou à base de SnZnO, ou de TiO₂.

Des couches de blocage peuvent être présentes dans l'empilement selon l'invention. Elles ont traditionnellement pour fonction de protéger les couches fonctionnelles d'une éventuelle dégradation lors du dépôt du revêtement antireflet supérieur et/ou lors d'un éventuel traitement thermique à haute température, du type recuit, bombage et/ou trempe.

Les couches de blocage sont par exemple choisies parmi les couches métalliques à base d'un métal ou d'un alliage métallique, les couches de nitrure métallique, les couches d'oxyde métallique et les couches d'oxynitrure métallique d'un ou plusieurs éléments choisis parmi le titane, le nickel, le chrome et le niobium telles que Ti, TiN, TiOx, Nb, NbN, Ni, NiN, Cr, CrN, NiCr, NiCrN ou encore NbNOx, NiCrOx.

L'épaisseur géométrique de telles couches est de l'ordre de quelques nanomètres, généralement inférieure à 7 nanomètres et lorsqu'une couche de blocage est fine, cette épaisseur est le plus souvent inférieure au nanomètre alors que lorsque lorsqu'une couche de blocage est, cette épaisseur est au moins le nanomètre et même de l'ordre de 1,5 à 4,5 nanomètres.

Lorsque ces couches de blocage sont déposées sous forme métallique, nitrurée ou oxynitrurée, ces couches peuvent subir une oxydation partielle ou totale selon leur épaisseur et la nature des couches qui les entourent, par exemple, au moment du dépôt de la couche suivante ou par oxydation au contact de la couche sous-jacente.

La ou les couches de blocage peuvent être considérées dans la matière absorbante dont la répartition constitue la base de l'invention en fonction du ou des éléments des matériaux constituant la ou les couches de blocage et en fonction de rapport n/k de la matière constituant la ou les couches de blocage ; pour une couche de blocage si le matériau qui la constitue présente un rapport n/K à la longueur d'onde de 550 nm entre 0,0 et 5,0 en excluant ces valeurs, alors cette couche de blocage est considérées dans la matière absorbante selon l'invention.

Par ailleurs, la ou les couches de blocage peuvent satisfaire une ou plusieurs des conditions suivantes :
- chaque couche métallique fonctionnelle est au contact d'au moins une couche de blocage choisie parmi une sous-couche de blocage et une surcouche de blocage, et/ou
- l'épaisseur de chaque couche de blocage fine est d'au moins 0,1 nm mais inférieure à 1,0 nanomètre, de préférence comprise entre 0,1 et 0,9 nm, et/ou
- l'épaisseur de chaque couche de blocage épaisse est d'au moins 1,0 nm mais inférieure ou égale à 5,0 nanomètres.

Il est possible que l'épaisseur totale de toutes les couches de blocage au contact des couches fonctionnelles soit comprise entre 3,5 et 8,0 nm en incluant ces valeurs.

Selon des modes de réalisation avantageux de l'invention, les revêtements diélectriques satisfont une ou plusieurs des conditions suivantes :
- les revêtements diélectriques comprennent au moins une couche diélectrique à base d'oxyde ou de nitrure d'un ou plusieurs éléments choisis parmi le silicium, le titane, le zirconium, l'aluminium, l'étain, le zinc, et/ou
- au moins un revêtement diélectrique comporte au moins une couche diélectrique à fonction barrière, et/ou
- chaque des revêtements diélectriques comporte au moins une couche diélectrique à fonction barrière, et/ou
- les couches diélectriques à fonction barrière sont à base de composés de silicium et/ou d'aluminium choisis parmi les oxydes tels que SiO₂ et Al₂O₃ ou leur mélange, les nitrures de silicium Si₃N₄ et AIN ou leur mélange et les oxynitures SiOₓN_{y} et AlOₓN_{y} ou leur mélange, ou encore à base de nitrure mixte de zirconium et d'aluminium, ou encore à base de dioxyde de titane et/ou
- les couches diélectriques à fonction barrière sont à base de composés de silicium et/ou d'aluminium comprennent éventuellement au moins un autre élément, comme l'aluminium, le hafnium et le zirconium, et/ou
- au moins un revêtement diélectrique comprend au moins une couche diélectrique à fonction stabilisante, et/ou
- chaque revêtement diélectrique comprend au moins une couche diélectrique à fonction stabilisante, et/ou
- les couches diélectriques à fonction stabilisante sont de préférence à base d'oxyde choisi parmi l'oxyde de zinc, l'oxyde d'étain, l'oxyde de zirconium ou un mélange d'au moins deux d'entre eux,
- les couches diélectriques à fonction stabilisante sont de préférence à base d'oxyde cristallisé, notamment à base d'oxyde de zinc, éventuellement dopé à l'aide d'au moins un autre élément, comme l'aluminium, et/ou
- chaque couche fonctionnelle est au-dessus d'un revêtement diélectrique dont la couche supérieure est une couche diélectrique à fonction stabilisante, de préférence à base d'oxyde de zinc et/ou en-dessous d'un revêtement diélectrique dont la couche inférieure est une couche diélectrique à fonction stabilisante, de préférence à base d'oxyde de zinc.

De préférence, chaque revêtement diélectrique est constitué uniquement d'une ou de plusieurs couches diélectriques. De préférence, il n'y a donc pas de couche absorbante dans les revêtements diélectriques afin de ne pas diminuer la transmission lumineuse.

Les empilements de l'invention peuvent comprendre des couches diélectriques à fonction barrière. On entend par couches diélectriques à fonction barrière, une couche en un matériau apte à faire barrière à la diffusion de l'oxygène et de l'eau à haute température, provenant de l'atmosphère ambiante ou du substrat transparent, vers la couche fonctionnelle. Les matériaux constitutifs de la couche diélectrique à fonction barrière ne doivent donc pas subir de modification chimique ou structurelle à haute température qui entraînerait une modification de leurs propriétés optiques. La ou les couches à fonction barrière sont de préférence également choisies en un matériau apte à faire barrière au matériau constitutif de la couche fonctionnelle. Les couches diélectriques à fonction barrière permettent donc à l'empilement de subir sans évolution optique trop significative des traitements thermiques du type recuit, trempe ou bombage.

Les empilements de l'invention peuvent comprendre des couches diélectriques à fonction stabilisante. Au sens de l'invention, « stabilisante » signifie que l'on sélectionne la nature de la couche de façon à stabiliser l'interface entre la couche fonctionnelle et cette couche. Cette stabilisation conduit à renforcer l'adhérence de la couche fonctionnelle aux couches qui l'entourent, et de fait elle va s'opposer à la migration de son matériau constitutif.

La ou les couches diélectriques à fonction stabilisante peuvent se trouver directement au contact d'une couche fonctionnelle ou séparées par une couche de blocage.

De préférence, la dernière couche diélectrique de chaque revêtement diélectrique situé en-dessous d'une couche fonctionnelle est une couche diélectrique à fonction stabilisante. En effet, il est avantageux d'avoir une couche à fonction stabilisante, par exemple, à base d'oxyde de zinc en-dessous d'une couche fonctionnelle, car elle facilite l'adhésion et la cristallisation de la couche fonctionnelle à base d'argent et augmente sa qualité et sa stabilité à haute température.

Il est également avantageux d'avoir une couche fonction stabilisante, par exemple, à base d'oxyde de zinc au-dessus d'une couche fonctionnelle, pour en augmenter l'adhésion et s'opposer de manière optimale à la diffusion du côté de l'empilement opposé au substrat.

La ou les couches diélectriques à fonction stabilisante peuvent donc se trouver au-dessus et/ou en dessous d'au moins une couche fonctionnelle ou de chaque couche fonctionnelle, soit directement à son contact ou soit séparées par une couche de blocage.

Avantageusement, chaque couche diélectrique à fonction barrière est séparée d'une couche fonctionnelle par au moins une couche diélectrique à fonction stabilisante.

Cette couche diélectrique à fonction stabilisante peut avoir une épaisseur d'au moins 4 nm, notamment une épaisseur comprise entre 4 et 20 nm et mieux de 8 à 15 nm.

L'empilement de couches minces peut éventuellement comprendre une couche de protection. La couche de protection est de préférence la dernière couche de l'empilement, c'est-à-dire la couche la plus éloignée du substrat revêtu de l'empilement. Ces couches supérieures de protection sont considérées comme comprises dans le quatrième revêtement diélectrique. Ces couches ont en général une épaisseur comprise entre 2 et 10 nm, de préférence 2 et 5 nm. Cette couche de protection peut être choisie parmi une couche de titane, de zirconium, d'hafnium, de zinc et/ou d'étain, ce ou ces métaux étant sous forme métallique, oxydée ou nitrurée ou oxynitrurée.

La couche de protection peut par exemple être choisie parmi une couche d'oxyde de titane, une couche d'oxyde de zinc et d'étain ou une couche d'oxyde de titane et de zirconium.

Un mode de réalisation particulièrement avantageux concerne un substrat revêtu d'un empilement défini en partant du substrat transparent comprenant :
- un premier revêtement diélectrique comprenant de préférence au moins une couche diélectrique à fonction barrière et une couche diélectrique à fonction stabilisante,
- éventuellement une couche de blocage,
- une première couche fonctionnelle,
- éventuellement une couche de blocage,
- un deuxième revêtement diélectrique comprenant de préférence au moins un couche diélectrique à fonction stabilisante inférieure, une couche diélectrique à fonction barrière et une couche diélectrique à fonction stabilisante supérieure,
- éventuellement une couche de blocage,
- une deuxième couche fonctionnelle,
- éventuellement une couche de blocage,
- un troisième revêtement diélectrique comprenant de préférence au moins un couche diélectrique à fonction stabilisante inférieure, une couche diélectrique à fonction barrière et une couche diélectrique à fonction stabilisante supérieure,
- éventuellement une couche de blocage,
- une troisième couche fonctionnelle,
- éventuellement une couche de blocage,
- un quatrième revêtement diélectrique comprenant de préférence au moins une couche diélectrique à fonction stabilisante et une couche diélectrique à fonction barrière et éventuellement une couche de protection.

Selon d'autres modes possibles et avantageux de réalisation de la présente invention :
- Chaque revêtement diélectrique en-dessous d'une couche fonctionnelle comporte une dernière couche stabilisante à base d'oxyde de zinc cristallisé, et qui est au contact de la couche fonctionnelle déposée juste au-dessus.
- Chaque revêtement diélectrique au-dessus d'une couche fonctionnelle comporte une première couche stabilisante à base d'oxyde de zinc cristallisé, et qui est au contact de la couche fonctionnelle déposée juste au-dessus.
- Chaque revêtement diélectrique comporte une couche diélectrique à fonction barrière à base de nitrure de silicium, dopé à l'aluminium appelée ici Si₃N₄.
- Chaque couche fonctionnelle métallique est en-dessous et au contact d'une couche de blocage.
- L'empilement comprend en outre une couche de protection en TiZr ou en oxyde de titane et de zirconium d'épaisseur inférieure à 5 nanomètres.

Les substrats transparents selon l'invention sont de préférence en un matériau rigide minéral, comme en verre, ou organiques à base de polymères (ou en polymère).

Les substrats transparents organiques selon l'invention peuvent également être en polymère, rigides ou flexibles. Des exemples de polymères convenant selon l'invention comprennent, notamment :
- le polyéthylène,
- les polyesters tels que le polyéthylène téréphtalate (PET), le polybutylène téréphtalate (PBT), le polyéthylène naphtalate (PEN) ;
- les polyacrylates tels que le polyméthacrylate de méthyle (PMMA) ;
- les polycarbonates ;
- les polyuréthanes ;
- les polyamides ;
- les polyimides ;
- les polymères fluorés comme les fluoroesters tels que l'éthylène tétrafluoroéthylène (ETFE), le polyfluorure de vinylidène (PVDF), le polychlorotrifluorethylène (PCTFE), l'éthylène de chlorotrifluorethylène (ECTFE), les copolymères éthylène-propylène fluores (FEP) ;
- les résines photoréticulables et/ou photopolymérisables, telles que les résines thiolène, polyuréthane, uréthane-acrylate, polyester-acrylate et
- les polythiouréthanes.

Le substrat est de préférence une feuille de verre ou de vitrocéramique.

Le substrat est de préférence transparent, incolore (il s'agit alors d'un verre clair ou extra-clair) ou coloré, par exemple en bleu, gris ou bronze. Le verre est de préférence de type silico-sodo-calcique, mais il peut également être en verre de type borosilicate ou alumino-borosilicate.

Le substrat possède avantageusement au moins une dimension supérieure ou égale à 1 m, voire 2 m et même 3 m selon une direction ou selon deux directions perpendiculaires. L'épaisseur du substrat varie généralement entre 0,5 mm et 19 mm, de préférence entre 2 et 12 mm, notamment entre 4 et 10 mm, voire entre 4 et 8 mm. Le substrat peut être plan ou bombé, voire flexible.

Le matériau, c'est-à-dire le substrat revêtu de l'empilement, peut subir un traitement thermique à température élevée tel qu'un recuit, par exemple par un recuit flash tel qu'un recuit laser ou flammage, une trempe et/ou un bombage. La température du traitement thermique est supérieure à 400 °C, de préférence supérieure à 450 °C, et mieux supérieure à 500 °C. Le substrat revêtu de l'empilement peut donc être bombé et/ou trempé.

Le vitrage de l'invention peut être sous forme de vitrage monolithique, feuilleté ou multiple, en particulier double vitrage ou triple vitrage.

Dans le cas d'un vitrage monolithique ou multiple, l'empilement est de préférence déposé en face 2, c'est-à-dire qu'il se trouve sur le substrat définissant la paroi extérieure du vitrage et plus précisément sur la face intérieure de ce substrat.

Un vitrage monolithique comporte 2 faces, la face 1 est à l'extérieur du bâtiment et constitue donc la paroi extérieure du vitrage, la face 2 est à l'intérieur du bâtiment et constitue donc la paroi intérieure du vitrage.

Un vitrage multiple comprend au moins deux substrats maintenus à distance de manière à délimiter une cavité remplie par un gaz isolant. Les matériaux selon l'invention conviennent tout particulièrement lorsqu'ils sont utilisés dans des double-vitrages à isolation thermique renforcée (ITR).

Un double vitrage comporte 4 faces, la face 1 est à l'extérieur du bâtiment et constitue donc la paroi extérieure du vitrage, la face 4 est à l'intérieur du bâtiment et constitue donc la paroi intérieure du vitrage, les faces 2 et 3 étant à l'intérieur du double vitrage.

De la même manière, un triple vitrage comporte 6 faces, la face 1 est à l'extérieur du bâtiment (paroi extérieure du vitrage), la face 6 à l'intérieur du bâtiment (paroi intérieure du vitrage) et les faces 2 à 5 sont à l'intérieur du triple vitrage.

Un vitrage feuilleté comporte au moins une structure de type premier substrat / feuille(s) / deuxième substrat. L'empilement de couches minces est positionné sur l'une au moins des faces d'un des substrats. L'empilement peut être sur la face du deuxième substrat non au contact de la feuille, de préférence polymère. Ce mode de réalisation est avantageux lorsque le vitrage feuilleté est monté en double vitrage avec un troisième substrat.

Le vitrage selon l'invention, utilisé comme vitrage monolithique ou dans un vitrage multiple de type double-vitrage, présente des couleurs en réflexion extérieure neutres, agréables et douces, dans la gamme des bleus ou bleus-verts (en particulier des couleurs dont la longueur d'onde dominante est de l'ordre de 450 à 500 nanomètres). De plus, cet aspect visuel reste quasiment inchangé quel que soit l'angle d'incidence avec lequel le vitrage est observé (incidence normale et sous angle). Cela signifie qu'un observateur n'a pas l'impression d'une inhomogénéité significative de teinte ou d'aspect.

Par « couleur dans le bleu-vert » au sens de la présente invention, il faut comprendre que dans le système de mesure de couleur L*a*b*, a* est compris entre -10,0 et 0,0, et b* est compris entre -10,0 et 0,0.

Le vitrage de l'invention présente de préférence des couleurs en transmission à incidence normale (0°) dans le système de mesure de couleur L*a*b* avec a* négative, de préférence comprise entre -10,0 et 0,0, de préférence encore entre -5,0 et 0,0 et une valeur de b* proche de zéro.

Le vitrage de l'invention présente de préférence des couleurs en réflexion côté extérieur à incidence normale (0°) dans le système de mesure de couleur L*a*b* :
- a*_{Re} compris entre -5,0 et 0,0, et
- b*_{Re} est compris entre -8,0 et -0,0.

Selon des modes de réalisation avantageux, le vitrage de l'invention sous forme d'un double vitrage comprenant l'empilement positionné de préférence en face 2 permet d'atteindre notamment les performances suivantes :
- une transmission lumineuse TL faible de l'ordre de 50 % (comprise entre 40,0 % et 55,0 %, en incluant ces valeurs ; voire comprise entre 42,0 % et 52,0 %),
- une réflexion extérieure Re élevée, de l'ordre d'au moins 27 % (comprise entre 27,0 % et 35,0 %, en incluant ces valeurs) et
- une réflexion intérieure Ri basse, de l'ordre de 20 % ou moins (comprise entre 5,0 % et 20,0 %, en incluant ces valeurs).

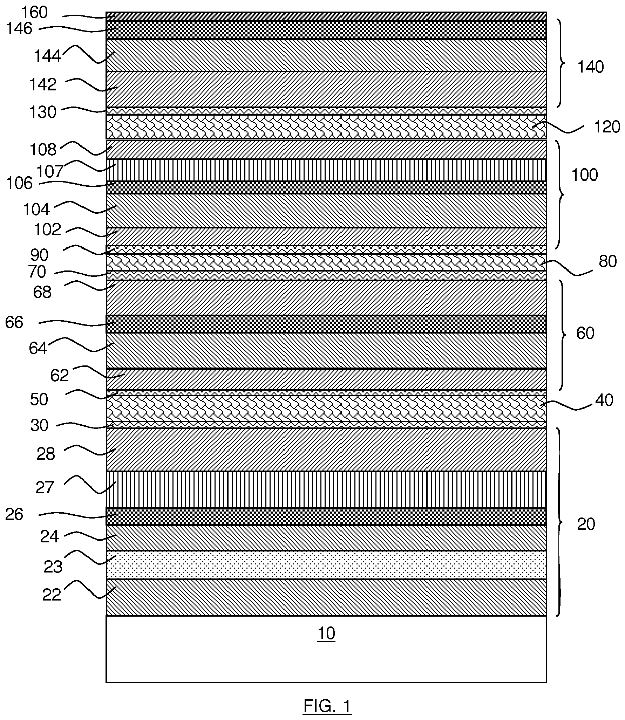

Les détails et caractéristiques avantageuses de l'invention ressortent des exemples non limitatifs suivants, illustrés à l'aide de la figure 1 jointe. Sur cette figure, les proportions entre les différents éléments ne sont pas respectées afin d'en faciliter la lecture.

La figure 1 illustre une structure d'empilement selon l'invention à uniquement trois couches métalliques fonctionnelles 40, 80, 120, cette structure étant déposée sur un substrat 10 verrier, transparent. Chaque couche fonctionnelle 40, 80, 120 est disposée entre deux revêtements diélectriques 20, 60, 100, 140 de telle sorte que, en partant du substrat :
- la première couche fonctionnelle 40 (ou « Ag1 ») est disposée entre un premier revêtement diélectrique 20 (ou « M1 ») et un second revêtement diélectrique 60 (ou « M2 »),
- la deuxième couche fonctionnelle 80 (ou « Ag2 ») est disposée entre le second revêtement diélectrique 60 (ou « M2 ») et un troisième revêtement diélectrique 100 (ou « M3 ») et
- la troisième couche fonctionnelle 120 (ou « Ag3 ») est disposée entre le troisième revêtement diélectrique 100 (ou « M3 ») et un quatrième, ou dernier, revêtement diélectrique 140 (ou « M4 »).

Ces revêtements diélectriques 20, 60, 100, 140 comportent chacun au moins une couche diélectrique 22, 23, 24, 27, 28 ; 62, 64, 68 ; 102, 104, 107, 108 ; 142, 144.

L'empilement peut comprendre également :
- des sous-couches de blocage 30, 70 situées au contact sous une couche fonctionnelle,
- des surcouches de blocage 50, 90 et 130 situées au contact sur une couche fonctionnelle,
- une couche de protection 160, par exemple en TiZr ou en oxyde de titane et de zirconium.

### Exemples :

Des empilements de couches minces définis ci-après sont déposés sur des substrats en verre sodo-calcique clair d'une épaisseur de 6 mm.

Dans les exemples :
- les couches fonctionnelles 40, 80 et 120 sont des couches d'argent (« Ag »),
- les couches de blocage 30, 50, 70, 90 et 130 sont des couches métalliques en alliage de nickel et de chrome (« NiCr »),
- les couches diélectriques 22, 23, 24, 27, 28 ; 62, 64, 68 ; 102, 104, 107, 108 ; 142, 144 sont :
   - pour les couches 22, 24, 64, 104 et 144, en nitrure de silicium, Si₃N₄, dopé à l'aluminium (« SiN »),
   - pour la couche 23, en nitrure de silicium et de zirconium, dopé à l'aluminium (« SiZrN »),
   - pour les couches 28, 62, 68, 102, 108 et 142, en oxyde de zinc dopé aluminium (« ZnO »)
   - pour les couches 27, et 107, en oxyde de zinc et d'étain (« SnZnO »)
- les couches absorbantes 26, 66, 106 et 146 sont constituées de la même matière que les couches de blocage ; elles sont des couches absorbantes métalliques en alliage de nickel et de chrome (pour NiCr, k = 3,0 à 550 nm).

Les conditions de dépôt des couches, qui ont été déposées par pulvérisation (pulvérisation dite « cathodique magnétron »), sont résumées dans le tableau 1.

**Tableau 1**

| | Cible employée | Pression de dépôt | Gaz | n à 550 nm |
|---|---|---|---|---|
| SiN | Si:Al à 92:8 (% en poids) | 3,2.10⁻³ mbar | Ar /(Ar + N₂) à 55 % | 2,03 |
| SiZrN | Si (73% at.) ; Zr (27% at.) | 3-4.10⁻³ mbar | Ar /(Ar + N₂) à 55 % | 2,38 |
| ZnO | Zn:Al à 98:2 (% en poids) | 1,8.10⁻³ mbar | Ar /(Ar + O₂) à 63 % | 1,95 |
| SnZnO | Sn-Zn à 50-50 (% en poids) | 3,1.10⁻³ mbar | Ar /(Ar + O₂) à 66 % | 2,18 |
| NiCr | Ni (80% at.) ; Cr (20% at.) | 2-3.10⁻³ mbar | Ar à 100 % | 2,50 |
| NbN | Nb | 2.10⁻³ mbar | Ar /(Ar + N₂) à 60 % | 3,80 |
| NiCrN | Ni (80% at.) ; Cr (20% at.) | 3,5.10⁻³ mbar | Ar /(Ar + N₂) à 34 % | 3,0 |
| Ag | Ag | 3.10⁻³ mbar | Ar à 100 % | - |

| | | | | |
|---|---|---|---|---|
| At. = atomique | | | | |

Le tableau 2 liste les matériaux et les épaisseurs physiques en nanomètres (sauf autre indication) de chaque couche et l'épaisseur optique (en nanomètres) correspondante de chaque revêtement diélectrique en fonction de leur position vis-à-vis du substrat porteur de l'empilement (dernière ligne en bas du tableau) pour une série d'exemples 1 à 8.

**Tableau 2**

| | **n° couche sur** **figure1** | **Ex. 1 ref** | **Ex. 2 comp** | **Ex. 3 inv** | **Ex. 4 inv** | **Ex. 5 comp** | **Ex. 6 inv** | **Ex. 7 inv** | **Ex. 8 comp** |
|---|---|---|---|---|---|---|---|---|---|
| Eo4 de M4 avec | 140 | 76 | 76 | 76 | 76 | 76 | 76 | 80 | 80 |
| Ep (NiCr) | 146 | | 1 | | | | | | |
| Ep (Si₃N₄) | 144 | 33,2 | 33,2 | 33,2 | 33,2 | 33,2 | 33,2 | 30,6 | 32,0 |
| Ep (ZnO) | 142 | 5,0 | 5,0 | 5,0 | 5,0 | 5,0 | 5,0 | 10,0 | 8,0 |
| Ep OB3 (NiCr) | 130 | 0,2 | 0,2 | 0,2 | 0,2 | 0,2 | 0,2 | 0,3 | 0,6 |
| Ep (Ag3) | 120 | 14,3 | 14,3 | 14,3 | 14,3 | 14,3 | 14,3 | 15,2 | 18,0 |
| Eo3 de M3 avec : | 100 | 150 | 150 | 150 | 150 | 150 | 150 | 156 | 173 |
| Ep (ZnO) | 108 | 5,0 | 5,0 | 5,0 | 5,0 | 5,0 | 5,0 | 4,0 | 8,0 |
| Ep (SnZnO) | 107 | 5,0 | 5,0 | 5,0 | 5,0 | 5,0 | 5,0 | 4,0 | 8,0 |
| Ep (NiCr) | 106 | | | 1 | | | 1 | | |
| Ep (Si₃N₄) | 104 | 60,0 | 60,0 | 60,0 | 60,0 | 60,0 | 60,0 | 60,8 | 62,0 |
| Ep (ZnO) | 102 | 5,0 | 5,0 | 5,0 | 5,0 | 5,0 | 5,0 | 10,0 | 8,0 |
| Ep OB2 (NiCr) | 90 | 0,2 | 0,2 | 0,2 | 0,2 | 0,2 | 0,2 | 0,5 | 0,5 |
| Ep Ag2 | 80 | 10,0 | 10,0 | 10,0 | 10,0 | 10,0 | 10,0 | 10,3 | 18,0 |
| Ep UB2 (NiCr) | 70 | 0,5 | 0,5 | 0,5 | 0,5 | 0,5 | 0,5 | 1,5 | 0,1 |
| Eo2 de M2 avec : | 60 | 77 | 77 | 77 | 77 | 77 | 77 | 90 | 122 |
| Ep (ZnO) | 68 | 5,0 | 5,0 | 5,0 | 5,0 | 5,0 | 5,0 | 4,0 | 8,0 |
| Ep (NiCr) | 66 | | | | 1 | | 1 | | |
| Ep (Si₃N₄) | 64 | 28,6 | 28,6 | 28,6 | 28,6 | 28,6 | 28,6 | 37,3 | 45,0 |
| Ep (ZnO) | 62 | 5,0 | 5,0 | 5,0 | 5,0 | 5,0 | 5,0 | 4,0 | 8,0 |
| Ep OB1 (NiCr) | 50 | 0,2 | 0,2 | 0,2 | 0,2 | 0,2 | 0,2 | 0,2 | 1,4 |
| Ep Ag1 | 40 | 10,0 | 10,0 | 10,0 | 10,0 | 10,0 | 10,0 | 10,0 | 10,0 |
| Ep UB1 (NiCr) | 30 | 0,3 | 0,3 | 0,3 | 0,3 | 0,3 | 0,3 | 0,1 | 0,7 |
| Eo1 de M1 avec : | 20 | 154 | 154 | 154 | 154 | 154 | 154 | 152 | 95 |
| Ep (ZnO) | 28 | 5,0 | 5,0 | 5,0 | 5,0 | 5,0 | 5,0 | 4,0 | 8,0 |
| Ep (SnZnO) | 27 | 8,7 | 8,7 | 8,7 | 8,7 | 8,7 | 8,7 | 4,7 | |
| Ep (NiCr) | 26 | | | | | 1 | | | |
| Ep (Si₃N₄) | 24 | 25,0 | 25,0 | 25,0 | 25,0 | 25,0 | 25,0 | 30,0 | |
| Ep (SiZrN) | 23 | 15,6 | 15,6 | 15,6 | 15,6 | 15,6 | 15,6 | 6,3 | |
| Ep (Si₃N₄) | 22 | 19,3 | 19,3 | 19,3 | 19,3 | 19,3 | 19,3 | 30,0 | 40 |
| Substrat verre (mm) | 6 | 6 | 6 | 6 | 6 | 6 | 6 | 6 | 6 |

| | | | | | | | | | |
|---|---|---|---|---|---|---|---|---|---|
| *Ep : Epaisseur physique (nm) ; Eo : Epaisseur optique (nm). | | | | | | | | | |

L'exemple 1 est l'exemple de référence (« ref ») ; c'est l'exemple qui sert de base pour expliquer l'invention. Les exemples 3, 4, 6 et 7 sont des exemples selon l'invention (« inv »). Les exemples comparatifs 2, 5 et 8 sont des exemples hors invention (« comp »).

Les exemples 1 à 8 sont des exemples à trois couches métalliques fonctionnelles à base d'argent.

Le tableau 3 liste les principales caractéristiques optiques mesurées lorsque les empilements font partie d'un double vitrage de structure 6/16/4 : (extérieur) verre de 6 mm / espace intercalaire de 16 mm rempli d'argon à 90 % / verre de 4 mm (intérieur), l'empilement étant positionné en face 2 (la face 1 du vitrage étant la face la plus à l'extérieur du vitrage, comme habituellement).

Pour ces doubles vitrages,
- TL indique : la transmission lumineuse dans le visible en %, mesurée selon l'illuminant D65 à 2° Observateur ;
- a*_{T} et b*_{T} indiquent les couleurs à incidence normale (0°) en transmission a* et b* dans le système L*a*b* mesurées selon l'illuminant D65 à 2° Observateur et mesurées perpendiculairement au vitrage ;
- Re indique : la réflexion lumineuse dans le visible en %, mesurée selon l'illuminant D65 à 2° Observateur du côté de la face la plus à l'extérieur, la face 1 ;
- a*_{Re} et b*_{Re} indiquent les couleurs à incidence normale (0°) en réflexion a* et b* dans le système L*a*b* mesurées selon l'illuminant D65 à 2° Observateur du côté de la face la plus à l'extérieur et mesurées ainsi perpendiculairement au vitrage,
- Ri indique : la réflexion lumineuse dans le visible en %, mesurée selon l'illuminant D65 à 2° Observateur du côté de la face intérieur, la face 4 ;
- a*_{Ri} et b*_{Ri} indiquent les couleurs à incidence normale (0°) en réflexion a* et b* dans le système L*a*b* mesurées selon l'illuminant D65 à 2° Observateur du côté de la face intérieur et mesurées ainsi perpendiculairement au vitrage ;
- a*(60°) et b*(60°) indiquent les couleurs a* et b* en réflexion dans le système L*a*b* mesurées à incidence à 60° par rapport à la normale selon l'illuminant D65 à 2° Observateur du côté verre, opposé à l'empilement, pour le substrat seul (monolithique).

Les valeurs cibles indiquées ci-après sont les valeurs qui sont préférées toutes à la fois pour l'invention, dans une version très aboutie de l'invention.

**Tableau 3**

| | **Valeur cible** | **Ex. 1 (ref)** | **Ex. 2 (comp)** | **Ex. 3 (inv)** | **Ex. 4 (inv)** | **Ex. 5 (comp)** | **Ex. 6 (inv)** | **Ex. 7 (inv)** | **Ex. 8 (comp)** |
|---|---|---|---|---|---|---|---|---|---|
| Facteurs solaire « g » | | 0,26 | 0,22 | 0,23 | 0,23 | 0,24 | 0,21 | 0,26 | 0,21 |
| Sélectivité « s » | ≥ 1,8 | 1,88 | 1,92 | 1,93 | 1,85 | 1,86 | 1,88 | 1,83 | 2,24 |
| T_{L}(%) | 50 | 49 | 43 | 45 | 42 | 45 | 39 | 48 | 47 |
| a*T | < 0 | -3,6 | -1,3 | -8,2 | -3,5 | -3,8 | -7,6 | -4,9 | -8,0 |
| b*_{T} | {-5,0;1,0} | -0,4 | 1,5 | -1,6 | -2,7 | -0,8 | -4,4 | -0,1 | 1,0 |
| Re(%) | ≥ 28 | 32 | 31 | 30 | 35 | 28 | 33 | 29 | 16 |
| a*_{Re} | {-5,0;0} | -3,6 | -10,8 | -2,5 | -4,2 | -4,0 | -1,0 | -2,1 | -5,0 |
| b*_{Re} | {-8,0;0} | -2,0 | -4,6 | -4,2 | -4,1 | -3,5 | -1,6 | -5,2 | -9,0 |
| Ri(%) | ≤ 20 | 26 | 26 | 20 | 20 | 28 | 19 | 20 | 18 |
| a*_{Ri} | {-7,0;0} | -8,5 | -24,3 | -6,4 | -7,0 | -8,8 | -3,4 | -3,6 | -11,0 |
| b*_{Ri} | {-8,0;0} | -0,5 | 12,9 | -12,6 | -2,5 | -0,4 | -6,0 | -6,2 | -10,0 |
| a*(60°) | | 0,6 | 6,4 | 7,1 | 0,2 | -1,1 | 5,6 | -4,7 | -4,5 |
| b*(60°) | | 10,5 | -17,5 | -8,3 | -9,4 | -10,1 | -7,3 | -7,7 | -3,0 |

Selon l'invention, il est possible de réaliser un vitrage comprenant un empilement à trois couches fonctionnelles métalliques qui présente une transmission lumineuse TL faible de l'ordre de 50 % (comprise entre 40 % et 55 %, en incluant ces valeurs), avec une réflexion extérieure Re élevée, de l'ordre d'au moins 27 % (comprise entre 27 % et 35 %, en incluant ces valeurs) et une réflexion intérieure Ri basse, de l'ordre de 20 % ou moins (comprise entre 5 % et 20 %, en incluant ces valeurs), avec une sélectivité S ≥ 1,8 pour un double vitrage avec l'empilement de couche minces en face 2. Les exemples 3, 4, 6 et 7 présentent tous toutes ces caractéristiques, grâce en particulier aux couches spécifiques en matière absorbantes qui sont soulignées dans le tableau :
- pour l'exemple 3 en raison du fait que de la matière absorbante est présente entre la deuxième couche fonctionnelle 80 et la troisième couche fonctionnelle 120, ce sont les couches 90 et 106, en une épaisseur totale de 1,2 nm et du fait que de la matière absorbante est présente entre la face du substrat et la première couche fonctionnelle 40, c'est la couche 30, en une épaisseur totale de seulement 0,3 nm et de la matière absorbante est présente au-dessus de la troisième couche fonctionnelle 120, c'est la couche 130, en une épaisseur totale de seulement 0,2 nm ;
- pour l'exemple 4 en raison du fait que de la matière absorbante est présente entre la première couche fonctionnelle 40 et la deuxième couche fonctionnelle 80, ce sont les couches 50, 66 et 70, en une épaisseur totale de 1,7 nm et du fait que de la matière absorbante est présente entre la face du substrat et la première couche fonctionnelle 40, c'est la couche 30, en une épaisseur totale de seulement 0,3 nm et de la matière absorbante est présente au-dessus de la troisième couche fonctionnelle 120, c'est la couche 130, en une épaisseur totale de seulement 0,2 nm ;

- pour l'exemple 6 en raison du fait que de la matière absorbante est présente entre ladite première couche fonctionnelle 40 et ladite deuxième couche fonctionnelle 80, ce sont les couches 50, 66 et 70, en une épaisseur totale de 1,7 nm et de la matière absorbante est présente entre la deuxième couche fonctionnelle 80 et la troisième couche fonctionnelle 120, ce sont les couches 90 et 106, en une épaisseur totale de 1,2 nm et du fait que de la matière absorbante est présente entre la face du substrat et la première couche fonctionnelle 40, c'est la couche 30, en une épaisseur totale de seulement 0,3 nm et de la matière absorbante est présente au-dessus de la troisième couche fonctionnelle 120, c'est la couche 130, en une épaisseur totale de seulement 0,2 nm ;
- pour l'exemple 7 en raison du fait que de la matière absorbante est présente entre ladite première couche fonctionnelle 40 et ladite deuxième couche fonctionnelle 80, ce sont les couches 50 et 70, en une épaisseur totale de 1,7 nm et du fait que de la matière absorbante est présente entre la face du substrat et la première couche fonctionnelle 40, c'est la couche 30, en une épaisseur totale de seulement 0,3 nm et de la matière absorbante est présente au-dessus de la troisième couche fonctionnelle 120, c'est la couche 130, en une épaisseur totale de seulement 0,2 nm.

Pour ces exemples selon l'invention, il est à noter que la matière absorbante est présente en relativement grande épaisseur entre la première et la deuxième couche fonctionnelle et/ou entre la deuxième et la troisième couche fonctionnelle alors qu'elle est présente en relativement petite épaisseur sous la première couche fonctionnelle et au-dessus de la troisième couche fonctionnelle ; c'est cette distribution particulière de la matière absorbante qui permet d'obtenir un vitrage présentant à la fois une transmission lumineuse faible de l'ordre de 50 %, une réflexion extérieure Re élevée, de l'ordre d'au moins 27 % et une réflexion intérieure Ri basse, de l'ordre de 20 % ou moins.

Les exemples 1, 2, 5 et 8 ne permettent pas de réaliser un vitrage qui présente une transmission lumineuse TL faible de l'ordre de 50 % (comprise entre 40 % et 55 %, en incluant ces valeurs), avec une réflexion extérieure Re élevée, de l'ordre d'au moins 27 % (comprise entre 27 % et 35 %, en incluant ces valeurs) et une réflexion intérieure Ri basse, de l'ordre de 20 % ou moins (comprise entre 5 % et 20 %, en incluant ces valeurs), avec une sélectivité S ≥ 1,8 :
- pour l'exemple 1 en raison du fait qu'il n'y a pas assez de matière absorbante dans l'empilement ;
- pour l'exemple 2 en raison du fait que la matière absorbante, celle de la couche 146, est positionnée complètement sur l'empilement, en dernière couche ;
- pour l'exemple 5 en raison du fait que la matière absorbante, celle de la couche 26, est positionnée dans le premier revêtement diélectrique 20 ;
- pour l'exemple 8 en raison du fait qu'il y a trop de matière absorbante entre le substrat et la première couche fonctionnelle métallique 40 (la couche 30 de 0,7 nm) et trop de matière absorbante au-dessus de la troisième couche fonctionnelle métallique 120 (la couche 130 de 0,6 nm).

Les exemples 3, 4, 6 et 7 selon l'invention présentent tous une coloration en transmission agréable et très faible, de préférence dans la gamme des bleus ou bleus-verts mais très peu intense.

Le tableau 4 liste les matériaux et les épaisseurs physiques en nanomètres (sauf autre indication) de chaque couche et l'épaisseur optique (en nanomètres) correspondante de chaque revêtement diélectrique en fonction de leur position vis-à-vis du substrat porteur de l'empilement (dernière ligne en bas du tableau) pour une série d'exemples 10 à 20.

**Tableau 4**

| | **n° couche sur** **figure 1** | **Ex. 10 ref** | **Ex. 11 comp** | **Ex. 12 comp** | **Ex. 13 inv** | **Ex. 14 inv** | **Ex. 15 inv** |
|---|---|---|---|---|---|---|---|
| Eo4 de M4 avec | 140 | 80,3 | 80,3 | 80,3 | 80,3 | 80,3 | 80,3 |
| Ep (Si₃N₄) | 144 | 30,6 | 30,6 | 30,6 | 30,6 | 30,6 | 30,6 |
| Ep (ZnO) | 142 | 10,0 | 10,0 | 10,0 | 10,0 | 10,0 | 10,0 |
| Ep OB3 (NiCr) | 130 | 0,3 | 0,3 | 1,3 | 0,3 | 0,3 | 0,3 |
| Ep (Ag3) | 120 | 15,2 | 15,2 | 15,2 | 15,2 | 15,2 | 15,2 |
| Eo3 de M3 avec : | 100 | 156,1 | 156,1 | 156,1 | 156,1 | 156,1 | 156,1 |
| Ep (ZnO) | 108 | 4,0 | 4,0 | 4,0 | 4,0 | 4,0 | 4,0 |
| Ep (SnZnO) | 107 | 4,0 | 4,0 | 4,0 | 4,0 | 4,0 | 4,0 |
| Ep (NiCr) | 106 | | | | | | |
| Ep (Si₃N₄) | 104 | 61 | 61 | 61 | 61 | 61 | 61 |
| Ep (ZnO) | 102 | 10,0 | 10,0 | 10,0 | 10,0 | 10,0 | 10,0 |
| Ep OB2 (NiCr) | 90 | 0,25 | 0,25 | 0,25 | 0,25 | 1,25 | 0,25 |
| Ep Ag2 | 80 | 10,5 | 10,5 | 10,5 | 10,5 | 10,5 | 10,5 |
| Ep UB2 (NiCr) | 70 | 0,5 | 0,5 | 0,5 | 1,5 | 0,5 | 0,5 |
| Eo2 de M2 avec : | 60 | 89,5 | 89,5 | 89,5 | 89,5 | 89,5 | 89,5 |
| Ep (ZnO) | 68 | 4,0 | 4,0 | 4,0 | 4,0 | 4,0 | 4,0 |
| Ep (NiCr) | 66 | | | | | | 1,0 |
| Ep (Si₃N₄) | 64 | 37,0 | 37,0 | 37,0 | 37,0 | 37,0 | 37,0 |
| Ep (ZnO) | 62 | 4,0 | 4,0 | 4,0 | 4,0 | 4,0 | 4,0 |
| Ep OB1 (NiCr) | 50 | 0,15 | 0,15 | 0,15 | 0,15 | 0,15 | 0,15 |
| Ep Ag1 | 40 | 10,0 | 10,0 | 10,0 | 10,0 | 10,0 | 10,0 |
| Ep UB1 (NiCr) | 30 | 0,15 | 1,15 | 0,15 | 0,15 | 0,15 | 0,15 |
| Eo1 de M1 avec : | 20 | 151,7 | 151,7 | 151,7 | 151,7 | 151,7 | 151,7 |
| Ep (ZnO) | 28 | 4,0 | 4,0 | 4,0 | 4,0 | 4,0 | 4,0 |
| Ep (SnZnO) | 27 | 4,7 | 4,7 | 4,7 | 4,7 | 4,7 | 4,7 |
| Ep (Si₃N₄) | 24 | 30,0 | 30,0 | 30,0 | 30,0 | 30,0 | 30,0 |
| Ep (SiZrN) | 23 | 6,0 | 6,0 | 6,0 | 6,0 | 6,0 | 6,0 |
| Ep (Si₃N₄) | 22 | 30,0 | 30,0 | 30,0 | 30,0 | 30,0 | 30,0 |
| Substrat verre (mm) | 6 | 6 | 6 | 6 | 6 | 6 | 6 |

| | | | | | | | |
|---|---|---|---|---|---|---|---|
| Ep : Epaisseur physique (nm) ; Eo : Epaisseur optique (nm). | | | | | | | |

**Tableau 4 (suite)**

| | **n° couche sur** **figure 1** | **Ex. 10 ref** | **Ex. 16 inv** | **Ex. 17 inv** | **Ex. 18 inv** | **Ex. 19 comp** | **Ex. 20 inv** |
|---|---|---|---|---|---|---|---|
| Eo de M4 avec | 140 | 80,3 | 80,3 | 80,3 | 80,3 | 80,3 | 80,3 |
| Ep (Si₃N₄) | 144 | 30,6 | 30,6 | 30,6 | 30,6 | 30,6 | 30,6 |
| Ep (ZnO) | 142 | 10,0 | 10,0 | 10,0 | 10,0 | 10,0 | 10,0 |
| Ep OB3 (NiCr) | 130 | 0,3 | 0,3 | 0,3 | 0,3 | 0,3 | 0,3 |
| Ep (Ag3) | 120 | 15,2 | 15,2 | 15,2 | 15,2 | 15,2 | 15,2 |
| Eo3 de M3 avec : | 100 | 156,1 | 156,1 | 156,1 | 156,1 | 156,1 | 156,1 |
| Ep (ZnO) | 108 | 4,0 | 4,0 | 4,0 | 4,0 | 4,0 | 4,0 |
| Ep (SnZnO) | 107 | 4,0 | 4,0 | 4,0 | 4,0 | 4,0 | 4,0 |
| Ep (NiCr) | 106 | | | 0,5 | | | |
| Ep (Si₃N₄) | 104 | 61 | 61 | 61 | 61 | 61 | 61 |
| Ep (ZnO) | 102 | 10,0 | 10,0 | 10,0 | 10,0 | 10,0 | 10,0 |
| Ep OB2 (NiCr) | 90 | 0,25 | 0,25 | 0,25 | 0,25 | 0,25 | 0,75 |
| Ep Ag2 | 80 | 10,5 | 10,5 | 10,5 | 10,5 | 10,5 | 10,5 |
| Ep UB2 (NiCr) | 70 | 0,5 | 1,0 | 1,0 | 1,0 | 0,8 | 1,0 |
| Eo2 de M2 avec : | 60 | 89,5 | 89,5 | 89,5 | 89,5 | 89,5 | 89,5 |
| Ep (ZnO) | 68 | 4,0 | 4,0 | 4,0 | 4,0 | 4,0 | 4,0 |
| Ep (NiCr) | 66 | | 0,5 | | | | |
| Ep (Si₃N₄) | 64 | 37,0 | 37,0 | 37,0 | 37,0 | 37,0 | 37,0 |
| Ep (ZnO) | 62 | 4,0 | 4,0 | 4,0 | 4,0 | 4,0 | 4,0 |
| Ep OB1 (NiCr) | 50 | 0,15 | 0,15 | 0,15 | 0,15 | 0,15 | 0,15 |
| Ep Ag1 | 40 | 10,0 | 10,0 | 10,0 | 10,0 | 10,0 | 10,0 |
| Ep UB1 (NiCr) | 30 | 0,15 | 0,15 | 0,15 | 0,15 | 0,15 | 0,15 |
| Eo1 de M1 avec : | 20 | 151,7 | 151,7 | 151,7 | 151,7 | 151,7 | 151,7 |
| Ep (ZnO) | 28 | 4,0 | 4,0 | 4,0 | 4,0 | 4,0 | 4,0 |
| Ep (SnZnO) | 27 | 4,7 | 4,7 | 4,7 | 4,7 | 4,7 | 4,7 |
| Ep (Si₃N₄) | 24 | 30,0 | 30,0 | 30,0 | 30,0 | 30,0 | 30,0 |
| Ep (SiZrN) | 23 | 6,0 | 6,0 | 6,0 | 6,0 | 6,0 | 6,0 |
| Ep (Si₃N₄) | 22 | 30,0 | 30,0 | 30,0 | 30,0 | 30,0 | 30,0 |
| Substrat verre (mm) | 6 | 6 | 6 | 6 | 6 | 6 | 6 |

| | | | | | | | |
|---|---|---|---|---|---|---|---|
| Ep : Epaisseur physique (nm) ; Eo : Epaisseur optique (nm). | | | | | | | |

Le tableau 5 liste les principales caractéristiques optiques mesurées, comme pour le tableau 3, lorsque les empilements font partie d'un double vitrage de structure 6/16/4 : (extérieur) verre de 6 mm / espace intercalaire de 16 mm rempli d'argon à 90 % / verre de 4 mm (intérieur), l'empilement étant positionné en face 2 (la face 1 du vitrage étant la face la plus à l'extérieur du vitrage, comme habituellement).

**Tableau 5**

| | **Ex. 10 ref** | **Ex. 11 comp** | **Ex. 12 comp** | **Ex. 13 inv** | **Ex. 14 inv** | **Ex. 15 inv** | **Ex. 16 inv** | **Ex. 17 inv** | **Ex. 18 inv** | **Ex. 19 comp** | **Ex. 20 inv** |
|---|---|---|---|---|---|---|---|---|---|---|---|
| g | 29,1 | 26,5 | 26,7 | 26,1 | 26,0 | 25,8 | 25,9 | 26,0 | 27,5 | 28,1 | 26 |
| s | 1,87 | 1,86 | 1,93 | 1,84 | 1,83 | 1,85 | 1,85 | 1,89 | 1,86 | 1,86 | 1,83 |
| T_{L}(%) | 54,3 | 49,2 | 51,6 | 48,0 | 47,5 | 47,7 | 47,8 | 49,2 | 51,1 | 52,3 | 47,7 |
| a*T | -4,4 | -4,5 | -6,2 | -4,9 | -4,9 | -4,8 | -4,9 | -6,6 | -4,7 | -4,6 | -4,9 |
| b*_{T} | 3,4 | 3,8 | 5,6 | -0,1 | -1,2 | 0,3 | 0,1 | 1,6 | 1,6 | 2,3 | -0,6 |
| Re(%) | 26,8 | 26,3 | 25,0 | 29,2 | 29,4 | 29,7 | 29,6 | 26,9 | 28,2 | 27,7 | 29,5 |
| a*_{Re} | -2,5 | -3,5 | -1,1 | -2,1 | -1,9 | -2,3 | -2,2 | 0,2 | -2,3 | -2,3 | -2,0 |
| b*_{Re} | -8,7 | -8,5 | -15,1 | -5,2 | -3,7 | -5,7 | -5,5 | -9,1 | -7,0 | -7,7 | -4,5 |
| Ri(%) | 22,0 | 23,8 | 21,2 | 19,7 | 18,8 | 20,0 | 19,8 | 19,0 | 20,0 | 21,1 | 19,1 |
| a*_{Ri} | -6,5 | -6,9 | -12,4 | -3,6 | -3,1 | -3,8 | -3,7 | -5,8 | -5,0 | -5,6 | -3,3 |
| b*_{Ri} | -7,9 | -7,7 | -7,8 | -6,2 | -7,6 | -6,0 | -6,1 | -11,9 | -7,2 | -7,5 | -6,9 |
| a*(60°) | -5,9 | -7,5 | 1,0 | -4,7 | -4,3 | -5,9 | -4,8 | -1,4 | -5,2 | -5,4 | -4,4 |
| b*(60°) | -9,6 | -9,3 | -14,2 | -7,7 | -6,5 | -9,7 | -8,0 | -8,5 | -8,7 | -9,1 | -7,1 |

Selon l'invention, il est possible de réaliser un vitrage comprenant un empilement à trois couches fonctionnelles métalliques qui présente une transmission lumineuse TL faible de l'ordre de 50 % (comprise entre 40,0 % et 55,0 %, en incluant ces valeurs), avec une réflexion extérieure Re élevée, de l'ordre d'au moins 27 % (comprise entre 27,0 % et 35,0 %, en incluant ces valeurs) et une réflexion intérieure Ri basse, de l'ordre de 20 % ou moins (comprise entre 5,0 % et 20,0 %, en incluant ces valeurs), avec une sélectivité S ≥ 1,8 pour un double vitrage avec l'empilement de couche minces en face 2. Les exemples 13, à 18 et 20 présentent tous toutes ces caractéristiques, grâce en particulier aux couches spécifiques en matière absorbantes qui sont soulignées dans le tableau :
- pour l'exemple 13 en raison du fait que de la matière absorbante est présente entre la première couche fonctionnelle 40 et la deuxième couche fonctionnelle 80, ce sont les couches 50 et 70, en une épaisseur totale de 1,65 nm et du fait que de la matière absorbante est présente entre la face du substrat et la première couche fonctionnelle 40, c'est la couche 30, en une épaisseur totale de seulement 0,15 nm et de la matière absorbante est présente au-dessus de la troisième couche fonctionnelle 120, c'est la couche 130, en une épaisseur totale de seulement 0,3 nm ;
- pour l'exemple 14 en raison du fait que de la matière absorbante est présente entre la deuxième couche fonctionnelle 80 et la troisième couche fonctionnelle 120, c'est la couche 90, en une épaisseur totale de 1,25 nm et du fait que de la matière absorbante est présente entre la face du substrat et la première couche fonctionnelle 40, c'est la couche 30, en une épaisseur totale de seulement 0,15 nm et de la matière absorbante est présente au-dessus de la troisième couche fonctionnelle 120, c'est la couche 130, en une épaisseur totale de seulement 0,3 nm ;
- pour l'exemple 15 en raison du fait que de la matière absorbante est présente entre la première couche fonctionnelle 40 et la deuxième couche fonctionnelle 80, ce sont les couches 50, 66 et 70, en une épaisseur totale de 1,65 nm et du fait que de la matière absorbante est présente entre la face du substrat et la première couche fonctionnelle 40, c'est la couche 30, en une épaisseur totale de seulement 0,15 nm et de la matière absorbante est présente au-dessus de la troisième couche fonctionnelle 120, c'est la couche 130, en une épaisseur totale de seulement 0,3 nm ;
- pour l'exemple 16 en raison du fait que de la matière absorbante est présente entre la première couche fonctionnelle 40 et la deuxième couche fonctionnelle 80, ce sont les couches 50, 66 et 70, en une épaisseur totale de 1,65 nm et du fait que de la matière absorbante est présente entre la face du substrat et la première couche fonctionnelle 40, c'est la couche 30, en une épaisseur totale de seulement 0,15 nm et de la matière absorbante est présente au-dessus de la troisième couche fonctionnelle 120, c'est la couche 130, en une épaisseur totale de seulement 0,3 nm ;
- pour l'exemple 17 en raison du fait que de la matière absorbante est présente entre la première couche fonctionnelle 40 et la deuxième couche fonctionnelle 80, ce sont les couches 50 et 70, en une épaisseur totale de 1,15 nm et du fait que de la matière absorbante est présente entre la face du substrat et la première couche fonctionnelle 40, c'est la couche 30, en une épaisseur totale de seulement 0,15 nm et de la matière absorbante est présente au-dessus de la troisième couche fonctionnelle 120, c'est la couche 130, en une épaisseur totale de seulement 0,3 nm ; cet exemple 17 comportant en outre une couche absorbante 106 dans le troisième revêtement diélectrique ;
- pour l'exemple 18 en raison du fait que de la matière absorbante est présente entre la première couche fonctionnelle 40 et la deuxième couche fonctionnelle 80, ce sont les couches 50 et 70, en une épaisseur totale de 1,15 nm et du fait que de la matière absorbante est présente entre la face du substrat et la première couche fonctionnelle 40, c'est la couche 30, en une épaisseur totale de seulement 0,15 nm et de la matière absorbante est présente au-dessus de la troisième couche fonctionnelle 120, c'est la couche 130, en une épaisseur totale de seulement 0,3 nm ; et
- pour l'exemple 20 en raison du fait que de la matière absorbante est présente entre la première couche fonctionnelle 40 et la deuxième couche fonctionnelle 80, ce sont les couches 50, 66 et 70, en une épaisseur totale de 1,15 nm et du fait que de la matière absorbante est présente entre la face du substrat et la première couche fonctionnelle 40, c'est la couche 30, en une épaisseur totale de seulement 0,15 nm et de la matière absorbante est présente au-dessus de la troisième couche fonctionnelle 120, c'est la couche 130, en une épaisseur totale de seulement 0,3 nm.

Les exemples 10 à 12 et 19 ne permettent pas de réaliser un vitrage qui présente une transmission lumineuse TL faible de l'ordre de 50 % (comprise entre 40 % et 55 %, en incluant ces valeurs), avec une réflexion extérieure Re élevée, de l'ordre d'au moins 27 % (comprise entre 27 % et 35 %, en incluant ces valeurs) et une réflexion intérieure Ri basse, de l'ordre de 20 % ou moins (comprise entre 5 % et 20 %, en incluant ces valeurs), avec une sélectivité S ≥ 1,8 :
- pour l'exemple 10 en raison du fait qu'il n'y a pas assez de matière absorbante dans l'empilement ;
- pour l'exemple 11 en raison du fait que la matière absorbante, celle de la couche 30, est positionnée sous la première couche fonctionnelle métallique 20 ;
- pour l'exemple 12 en raison du fait que la matière absorbante, celle de la couche 130, est positionnée au-dessus de la troisième couche fonctionnelle métallique 120 ;
- pour l'exemple 19 en raison du fait qu'il n'y a pas assez de matière absorbante entre la première couche fonctionnelle métallique 40 et la deuxième couche fonctionnelle métallique 80.

Deux exemples supplémentaires ont été réalisés sur la base de l'exemple 15, en remplaçant la couche 64, en matière absorbante, de 1 nm en NiCr par :
- une couche 64, en matière absorbante, de 1 nm en NbN (exemple 21 ; k = 2,9 à 550 nm) et
- une couche 64, en matière absorbante, de 1 nm en NiCrN (exemple 22 ; k = 3,3 à 550 nm).

Ces exemples ont permis de réaliser un vitrage du même type que celui des tableaux 3 et 5 présentant :
- une transmission lumineuse TL basse, de 50,2 % (exemple 21) et de 46,1 % (exemple 22),
- une réflexion extérieure Re élevée, de 27,8 % (exemple 21) et de 29,2 % (exemple 22),
- une réflexion intérieure Ri basse, de 19,2 % (exemple 21) et de 17,2 % (exemple 22),
- un facteur solaire « g » élevé, de 27,4 % (exemple 21) et de 25,5 % (exemple 22), et
- une sélectivité « s » élevée, de 1,83 (exemple 21) et de 1,81 (exemple 22).

Une autre série d'exemples a été réalisée avec des répartitions d'épaisseurs des couches fonctionnelles qui sont différentes.

Le tableau 6 liste les matériaux et les épaisseurs physiques en nanomètres (sauf autre indication) de chaque couche et l'épaisseur optique (en nanomètres) correspondante de chaque revêtement diélectrique en fonction de leur position vis-à-vis du substrat porteur de l'empilement (dernière ligne en bas du tableau) pour une série d'exemples 21 à 26.

**Tableau 6**

| | **n° couche sur** **figure 1** | **Ex. 21 inv** | **Ex. 22 comp** | **Ex. 23 comp** | **Ex. 24 inv** | **Ex. 25 comp** | **Ex. 26 comp** |
|---|---|---|---|---|---|---|---|
| Eo4 de M4 avec | 140 | 79,0 | 79,0 | 95,0 | 79,0 | 79,0 | 90,0 |
| Ep (Si₃N₄) | 144 | 34,3 | 34,3 | 42,3 | 34,4 | 34,4 | 39,9 |
| Ep (ZnO) | 142 | 5,0 | 5,0 | 5,0 | 5,0 | 5,0 | 5,0 |
| Ep OB3 (NiCr) | 130 | 0,2 | 1,5 | 1,5 | 0,3 | 1,5 | 1,5 |
| Ep (Ag3) | 120 | 16,0 | 16,0 | 16,0 | 15,0 | 15,0 | 15,0 |
| Eo3 de M3 avec : | 100 | 153 | 153 | 163 | 145 | 145 | 157 |
| Ep (ZnO) | 108 | 5,0 | 5,0 | 5,0 | 5,0 | 5,0 | 5,0 |
| Ep (SnZnO) | 107 | 5,0 | 5,0 | 5,0 | 5,0 | 5,0 | 5,0 |
| Ep (Si₃N₄) | 104 | 61,5 | 61,5 | 66,6 | 57,3 | 57,3 | 63,5 |
| Ep (ZnO) | 102 | 5,0 | 5,0 | 5,0 | 5,0 | 5,0 | 5,0 |
| Ep OB2 (NiCr) | 90 | 0,2 | 0,2 | 0,2 | 0,2 | 0,2 | 0,2 |
| Ep Ag2 | 80 | 12,0 | 12,0 | 12,0 | 8,0 | 8,0 | 8,0 |
| Ep UB2 (NiCr) | 70 | 1,5 | 0,2 | 0,2 | 1,5 | 0,2 | 0,2 |
| Eo2 de M2 avec : | 60 | 94 | 94 | 82 | 87 | 87 | 77 |
| Ep (ZnO) | 68 | 5,0 | 5,0 | 5,0 | 5,0 | 5,0 | 5,0 |
| Ep (Si₃N₄) | 64 | 36,8 | 36,8 | 31,2 | 33,3 | 33,3 | 28,3 |
| Ep (ZnO) | 62 | 5,0 | 5,0 | 5,0 | 5,0 | 5,0 | 5,0 |
| Ep OB1 (NiCr) | 50 | 0,2 | 0,2 | 0,2 | 0,2 | 0,2 | 0,2 |
| Ep Ag1 | 40 | 8,0 | 8,0 | 8,0 | 10,0 | 10,0 | 10,0 |
| Ep UB1 (NiCr) | 30 | 0,3 | 0,3 | 0,3 | 0,3 | 0,3 | 0,3 |
| Eo1 de M1 avec : | 20 | 148 | 148 | 220 | 151 | 151 | 253 |
| Ep (ZnO) | 28 | 5,0 | 5,0 | 5,0 | 5,0 | 5,0 | 5,0 |
| Ep (SnZnO) | 27 | 9,0 | 9,0 | 9,0 | 9,0 | 9,0 | 9,0 |
| Ep (Si₃N₄) | 24 | 25,0 | 25,0 | 50,0 | 32,8 | 32,8 | 47,1 |
| Ep (SiZrN) | 23 | 15,6 | 15,6 | 15,6 | 15,6 | 15,6 | 15,6 |
| Ep (Si₃N₄) | 22 | 19,3 | 19,3 | 30,0 | 13,3 | 13,3 | 50,0 |
| Substrat verre (mm) | 6 | 6 | 6 | 6 | 6 | 6 | 6 |

| | | | | | | | |
|---|---|---|---|---|---|---|---|
| Ep : Epaisseur physique (nm) ; Eo : Epaisseur optique (nm). | | | | | | | |

Le tableau 7 liste les principales caractéristiques optiques mesurées, comme pour les tableaux 3 et 5, lorsque les empilements font partie d'un double vitrage de structure 6/16/4 : (extérieur) verre de 6 mm / espace intercalaire de 16 mm rempli d'argon à 90 % / verre de 4 mm (intérieur), l'empilement étant positionné en face 2 (la face 1 du vitrage étant la face la plus à l'extérieur du vitrage, comme habituellement).

**Tableau 7**

| | **Valeurs préférées** | **Valeurs plus préférées** | **Ex. 21 inv** | **Ex. 22 comp** | **Ex. 23 comp** | **Ex. 24 inv** | **Ex. 25 comp** | **Ex. 26 comp** |
|---|---|---|---|---|---|---|---|---|
| g | | | 25,2 | 25,8 | 24,4 | 25,7 | 26,8 | 26,6 |
| s | | | 1,9 | 2,0 | 2,1 | 1,8 | 2,0 | 1,9 |
| T_{L}(%) | ≥ 55,0 | | 47,1 | 51,9 | 50,4 | 46,9 | 52,5 | 51,6 |
| | ≤ 40,0 | | | | | | | |
| a*T | | < 0 | -6,0 | -9,5 | -8,1 | -5,7 | -8,0 | -5,7 |
| b*_{T} | | {-5,0;1,0} | -3,2 | 4,0 | 1,8 | -0,2 | 8,3 | 0,7 |
| Re(%) | ≥ 27,0 | | 28,1 | 22,6 | 27,0 | 28,3 | 22,9 | 26,1 |
| a*_{Re} | | {-5,0;0} | -2,2 | 3,6 | -2,0 | -1,8 | 1,6 | -3,7 |
| b*_{Re} | | {-8,0;0} | -0,3 | -13,5 | -1,1 | -6,9 | -20,4 | -2,0 |
| Ri(%) | ≤ 20,0 | | 20,0 | 22,6 | 22 | 17,6 | 20,3 | 21 |
| a*_{Ri} | | {-7,0;0} | -0,2 | -12,7 | -4,7 | -0,1 | -12,8 | -6,1 |
| b*_{Ri} | | {-8,0;0} | -1,4 | -6,8 | -8,0 | -8 | -11,0 | -5,0 |
| a*(60°) | | | 2,3 | 13,3 | 5,0 | -0,5 | 7,9 | -2,6 |
| b*(60°) | | | -6,0 | -12,2 | -3,3 | -10,0 | -18,3 | -2,8 |

L'exemple 21 selon l'invention se distingue des précédents par une distribution différente de l'épaisseur des couches fonctionnelles métalliques : la première couche fonctionnelle métallique est plus fine que précédemment, la seconde couche fonctionnelle métallique est plus épaisse que la première et la troisième couche fonctionnelle métallique est plus épaisse que la seconde.

L'exemple 24 selon l'invention se distingue des précédents par une distribution différente de l'épaisseur des couches fonctionnelles métalliques : la seconde couche fonctionnelle métallique est la plus fine, la première couche fonctionnelle métallique est plus épaisse que la seconde et la troisième couche fonctionnelle métallique est plus épaisse que la première.

Pour ces exemples 21 et 24, l'épaisseur relativement important des couches en matière absorbante dans le second et le troisième revêtement diélectrique comparée à l'épaisseur relativement fine des couches en matière absorbante dans le premier et le quatrième revêtement diélectrique permet d'atteindre les caractéristiques optiques préférées pour l'invention (rappelée en seconde colonne) et même les valeurs plus préférées (en 3^{e} colonne).

Les exemples 22 et 23 présentent la même distribution pour l'épaisseur des couches fonctionnelles métalliques que l'exemple 21 mais n'atteignent pas les caractéristiques optiques préférées pour l'invention car l'épaisseur des couches en matière absorbante dans le premier et le quatrième revêtement diélectrique est trop élevée par rapport à l'épaisseur des couches en matière absorbante dans le second et le troisième revêtement diélectrique.

De même, les exemples 25 et 26 présentent la même distribution pour l'épaisseur des couches fonctionnelles métalliques que l'exemple 24 mais n'atteignent pas les caractéristiques optiques préférées pour l'invention car l'épaisseur des couches en matière absorbante dans le premier et le quatrième revêtement diélectrique est trop élevée par rapport à l'épaisseur des couches en matière absorbante dans le second et le troisième revêtement diélectrique.

## Revendications

1. Matériau comprenant un substrat transparent revêtu sur une face d'un empilement de couches minces comportant successivement à partir de ladite face une alternance :
- de trois couches métalliques fonctionnelles à base d'argent dénommées en partant du substrat première couche fonctionnelle Ag1, deuxième couche fonctionnelle Ag2 et troisième couche fonctionnelle Ag3, d'épaisseurs physiques respectivement Ea1, Ea2, Ea3, et
- de quatre revêtements diélectriques dénommés en partant de ladite face du substrat M1, M2, M3 et M4, d'épaisseurs optiques respectivement Eo1, Eo2, Eo3, Eo4, chaque revêtement diélectrique comportant une couche diélectrique ou un ensemble diélectrique de couches,
de manière à ce que chaque couche métallique fonctionnelle soit disposée entre deux revêtements diélectriques,
ledit matériau étant **caractérisé en ce que** :
- de la matière absorbante est présente entre ladite première couche fonctionnelle Ag1 et ladite deuxième couche fonctionnelle Ag2, en une épaisseur totale Abs2 telle que 1,0 ≤ Abs2 ≤ 5,0 nm et/ou de la matière absorbante est présente entre ladite deuxième couche fonctionnelle Ag2 et ladite troisième couche fonctionnelle Ag3, en une épaisseur totale Abs3 telle que 1,0 ≤ Abs3 ≤ 5,0 nm ;
- de la matière absorbante est présente entre ladite face du substrat et ladite première couche fonctionnelle Ag1 en une épaisseur totale Abs1 telle que 0,0 < Abs1 ≤ 0,5 nm et de la matière absorbante est présente au-dessus de ladite troisième couche fonctionnelle Ag3, en une épaisseur totale Abs4 telle que 0,0 < Abs4 ≤ 0,5 nm.

2. Matériau selon la revendication 1, dans lequel l'épaisseur physique Ea1 et Ea2 respectivement de ladite première et de ladite deuxième couche fonctionnelle Ag1, Ag2 est chacune comprise entre 7,0 et 12,0 nm et l'épaisseur physique Ea3 de ladite troisième couche fonctionnelle Ag3 est comprise entre 13,0 et 16,0 nm.

3. Matériau selon la revendication 1 ou 2, dans lequel ladite matière absorbante présente entre ladite première couche fonctionnelle Ag1 et ladite deuxième couche fonctionnelle Ag2 est présente au contact de ladite couche fonctionnelle Ag2, avec au moins la moitié, et de préférence la totalité, de ladite épaisseur totale Abs2 située au contact de ladite couche fonctionnelle Ag2.

4. Matériau selon l'une quelconque des revendications 1 à 3, dans lequel ladite matière absorbante présente entre ladite deuxième couche fonctionnelle Ag2 et ladite troisième couche fonctionnelle Ag3 est présente au contact de ladite couche fonctionnelle Ag2, avec au moins la moitié, et de préférence la totalité, de ladite épaisseur totale Abs3 située au contact de ladite couche fonctionnelle Ag2.

5. Matériau selon l'une quelconque des revendications 1 à 4, dans lequel ledit premier revêtement diélectrique M1, et de préférence uniquement ce premier revêtement diélectrique M1, comporte une couche haut indice (12), présentant un indice de réfraction à 550 nm qui est d'au moins 2,15, et présentant une épaisseur optique Eo₁₂ comprise entre 10,0 et 40,0 nm.

6. Matériau selon l'une quelconque des revendications 1 à 5, dans lequel ledit premier revêtement diélectrique M1 présente une épaisseur optique Eo1 comprise entre 130,0 et 160,0 nm.

7. Matériau selon l'une quelconque des revendications 1 à 6, dans lequel ledit deuxième revêtement diélectrique M2 présente une épaisseur optique Eo2 comprise entre 80,0 et 100,0 nm.

8. Matériau selon l'une quelconque des revendications 1 à 7, dans lequel ledit troisième revêtement diélectrique M3 présente une épaisseur optique Eo3 comprise entre 140,0 et 180,0 nm.

9. Matériau selon l'une des revendications 1 à 8, dans lequel ledit quatrième revêtement diélectrique M4 présente une épaisseur optique Eo4 comprise entre 50,0 et 90,0 nm.

10. Matériau selon l'une quelconque des revendications 1 à 9, dans lequel le rapport de l'épaisseur optique Eo2 dudit deuxième revêtement diélectrique M2 sur l'épaisseur optique Eo1 dudit premier revêtement diélectrique M1 est d'une part égal ou supérieur à 0,4 et d'autre part inférieur ou égal à 0,9.

11. Matériau selon l'une quelconque des revendications 1 à 10, dans lequel le rapport de l'épaisseur optique Eo1 dudit premier revêtement diélectrique M1 sur l'épaisseur optique Eo4 dudit quatrième revêtement diélectrique M4 est supérieur à 1,5, voire supérieur à 1,8, voire supérieur à 2,0.

12. Matériau selon l'une quelconque des revendications 1 à 11, dans lequel le rapport de l'épaisseur optique Eo3 dudit troisième revêtement diélectrique M3 sur l'épaisseur optique Eo1 dudit premier revêtement diélectrique M1 est compris entre 0,9 et 1,1.

13. Vitrage comprenant au moins un matériau selon l'une quelconque des revendications 1 à 12, ledit vitrage étant de préférence sous forme de vitrage feuilleté ou multiple, en particulier sous forme de double vitrage ou de triple vitrage.

14. Vitrage selon la revendication 13 sous forme de double vitrage présentant une transmission lumineuse TL 40,0 % ≤ TL ≤55,0 %, une réflexion extérieure Re d'au moins 27,0 % et une réflexion intérieure Ri de 20,0 % ou moins.

## Patentansprüche

1. Material, umfassend ein transparentes Substrat, das auf einer Seite mit einem Stapel dünner Schichten beschichtet ist, der ausgehend von der genannten Seite nacheinander abwechselnd aufweist:
- drei metallische Funktionsschichten auf Silberbasis, die ausgehend von dem Substrat als erste Funktionsschicht Ag1, zweite Funktionsschicht Ag2 und dritte Funktionsschicht Ag3 bezeichnet werden, mit physischen Dicken Ea1, Ea2 beziehungsweise Ea3, und
- vier dielektrische Beschichtungen, die ausgehend von der Seite des Substrats als M1, M2, M3 und M4 bezeichnet werden, mit optischen Dicken Eo1, Eo2, Eo3 beziehungsweise Eo4, wobei jede dielektrische Beschichtung eine dielektrische Schicht oder einen dielektrischen Satz von Schichten aufweist,
sodass jede metallische Funktionsschicht zwischen zwei dielektrischen Beschichtungen angeordnet ist,
wobei das Material **dadurch gekennzeichnet ist, dass**:
- sich zwischen der ersten Funktionsschicht Ag1 und der zweiten Funktionsschicht Ag2 absorbierendes Material mit einer Gesamtdicke Abs2 von 1,0 ≤ Abs2 ≤ 5,0 nm befindet und/oder sich zwischen der zweiten Funktionsschicht Ag2 und der dritten Funktionsschicht Ag3 absorbierendes Material mit einer Gesamtdicke Abs3 von 1,0 ≤ Abs3 ≤ 5,0 nm befindet;
- sich zwischen der Seite des Substrats und der ersten Funktionsschicht Ag1 absorbierendes Material mit einer Gesamtdicke Abs1 von 0,0 < Abs1 ≤ 0,5 nm befindet und sich über der dritten Funktionsschicht Ag3 absorbierendes Material mit einer Gesamtdicke Abs4 von 0,0 < Abs4 ≤ 0,5 nm befindet.

2. Material nach Anspruch 1, wobei die jeweilige physische Dicke Ea1 und Ea2 der ersten und zweiten Funktionsschicht Ag1, Ag2 jeweils zwischen 7,0 und 12,0 nm beträgt und die physische Dicke Ea3 der dritten Funktionsschicht Ag3 zwischen 13,0 und 16,0 nm beträgt.

3. Material nach Anspruch 1 oder 2, wobei das zwischen der ersten Funktionsschicht Ag1 und der zweiten Funktionsschicht Ag2 befindliche absorbierende Material mit mindestens der Hälfte und vorzugsweise der gesamten mit der Funktionsschicht Ag2 in Kontakt stehend angeordneten Gesamtdicke Abs2 mit der Funktionsschicht Ag2 in Kontakt steht.

4. Material nach Anspruch 1 oder 3, wobei das zwischen der zweiten Funktionsschicht Ag2 und der dritten Funktionsschicht Ag3 befindliche absorbierende Material mit mindestens der Hälfte und vorzugsweise der gesamten mit der Funktionsschicht Ag2 in Kontakt stehend angeordneten Gesamtdicke Abs3 mit der Funktionsschicht Ag2 in Kontakt steht.

5. Material nach einem der Ansprüche 1 bis 4, wobei die erste dielektrische Beschichtung M1 und vorzugsweise ausschließlich diese erste dielektrische Beschichtung M1 eine hochbrechende Schicht (12) mit einem Brechungsindex bei 550 nm von mindestens 2,15 und mit einer optischen Dicke Eo₁₂ zwischen 10,0 und 40,0 nm aufweist.

6. Material nach einem der Ansprüche 1 bis 5, wobei die erste dielektrische Beschichtung M1 eine optische Dicke Eo1 zwischen 130,0 und 160,0 nm aufweist.

7. Material nach einem der Ansprüche 1 bis 6, wobei die zweite dielektrische Beschichtung M2 eine optische Dicke Eo2 zwischen 80,0 und 100,0 nm aufweist.

8. Material nach einem der Ansprüche 1 bis 7, wobei die dritte dielektrische Beschichtung M3 eine optische Dicke Eo3 zwischen 140,0 und 180,0 nm aufweist.

9. Material nach einem der Ansprüche 1 bis 8, wobei die vierte dielektrische Beschichtung M4 eine optische Dicke Eo4 zwischen 50,0 und 90,0 nm aufweist.

10. Material nach einem der Ansprüche 1 bis 9, wobei das Verhältnis der optischen Dicke Eo2 der zweiten dielektrischen Beschichtung M2 zu der optischen Dicke Eo1 der ersten dielektrischen Beschichtung M1 einerseits gleich oder größer als 0,4 und andererseits kleiner oder gleich 0,9 ist.

11. Material nach einem der Ansprüche 1 bis 10, wobei das Verhältnis der optischen Dicke Eo1 der ersten dielektrischen Beschichtung M1 zu der optischen Dicke Eo4 der vierten dielektrischen Beschichtung M4 größer als 1,5, sogar größer als 1,8, sogar größer als 2,0 ist.

12. Material nach einem der Ansprüche 1 bis 11, wobei das Verhältnis der optischen Dicke Eo3 der dritten dielektrischen Beschichtung M3 zu der optischen Dicke Eo1 der ersten dielektrischen Beschichtung M1 zwischen 0,9 und 1,1 beträgt.

13. Verglasung, umfassend mindestens ein Material nach einem der Ansprüche 1 bis 12, wobei die Verglasung vorzugsweise in Form einer Verbund- oder Mehrfachverglasung, insbesondere in Form einer Doppelverglasung oder Dreifachverglasung, vorliegt.

14. Verglasung nach Anspruch 13 in Form einer Doppelverglasung, die eine Lichtdurchlässigkeit TL von 40,0 % ≤ TL ≤ 55,0 %, eine Außenreflexion Re von mindestens 27,0 % und eine Innenreflexion Ri von 20,0 % oder weniger aufweist.

## Claims

1. A material comprising a transparent substrate coated on one face with a stack of thin layers successively comprising, starting from said face, an alternation:
- of three silver-based functional metal layers denoted, starting from the substrate, first functional layer Ag1, second functional layer Ag2 and third functional layer Ag3, with physical thicknesses respectively Ea1, Ea2 and Ea3, and
- of four dielectric coatings denoted, starting from said face of the substrate, M1, M2, M3 and M4, with optical thicknesses respectively Eo1, Eo2, Eo3 and Eo4, each dielectric coating comprising a dielectric layer or a dielectric assembly of layers,
so that each functional metal layer is positioned between two dielectric coatings,
said material being **characterized in that**:
- absorbent material is present between said first functional layer Ag1 and said second functional layer Ag2, in a total thickness Abs2 such that 1.0 ≤ Abs2 ≤ 5.0 nm and/or absorbent material is present between said second functional layer Ag2 and said third functional layer Ag3, in a total thickness Abs3 such that 1.0 ≤ Abs3 ≤ 5.0 nm;
- absorbent material is present between said face of the substrate and said first functional layer Ag1 in a total thickness Abs1 such that 0.0 < Abs1 ≤ 0.5 nm and absorbent material is present above said third functional layer Ag3, in a total thickness Abs4 such that 0.0 < Abs4 ≤ 0.5 nm.

2. The material as claimed in claim 1, wherein the physical thicknesses Ea1 and the Ea2 respectively of said first and said second functional layers Ag1, Ag2 are each between 7.0 and 12.0 nm and the physical thickness Ea3 of said third functional layer Ag3 is between 13.0 and 16.0 nm.

3. The material as claimed in claim 1 or 2, wherein said absorbent material present between said first functional layer Ag1 and said second functional layer Ag2 is present in contact with said functional layer Ag2, with at least half, and preferably all, of said total thickness Abs2 located in contact with said functional layer Ag2.

4. The material as claimed in any one of claims 1 to 3, wherein said absorbent material present between said second functional layer Ag2 and said third functional layer Ag3 is present in contact with said functional layer Ag2, with at least half, and preferably all, of said total thickness Abs3 located in contact with said functional layer Ag2.

5. The material as claimed in any one of claims 1 to 4, wherein said first dielectric coating M1, and preferably only this first dielectric coating M1, comprises a high-index layer (12), having a refractive index at 550 nm which is at least 2.15, and having an optical thickness Eo₁₂ between 10.0 and 40.0 nm.

6. The material as claimed in any one of claims 1 to 5, wherein said first dielectric coating M1 has an optical thickness Eo1 between 130.0 and 160.0 nm.

7. The material as claimed in any one of claims 1 to 6, wherein said second dielectric coating M2 has an optical thickness Eo2 between 80.0 and 100.0 nm.

8. The material as claimed in any one of claims 1 to 7, wherein said third dielectric coating M3 has an optical thickness Eo3 between 140.0 and 180.0 nm.

9. The material as claimed in any one of claims 1 to 8, wherein said fourth dielectric coating M4 has an optical thickness Eo4 between 50.0 and 90.0 nm.

10. The material as claimed in any one of claims 1 to 9, wherein the ratio of the optical thickness Eo2 of said second dielectric coating M2 to the optical thickness Eo1 of said first dielectric coating M1 is, on the one hand, equal to or greater than 0.4 and, on the other hand, less than or equal to 0.9.

11. The material as claimed in any one of claims 1 to 10, wherein the ratio of the optical thickness Eo1 of said first dielectric coating M1 to the optical thickness Eo4 of said fourth dielectric coating M4 is greater than 1.5, or even greater than 1.8, or even greater than 2.0.

12. The material as claimed in any one of claims 1 to 11, wherein the ratio of the optical thickness Eo3 of said third dielectric coating M3 to the optical thickness Eo1 of said first dielectric coating M1 is between 0.9 and 1.1.

13. A glazing comprising at least one material as claimed in any one of claims 1 to 12, said glazing preferably being in the form of laminated or multiple glazing, in particular in the form of double glazing or triple glazing.

14. The glazing as claimed in claim 13, in the form of double glazing having a light transmission T_{L} of 40.0% ≤ T_{L} ≤ 55.0%, an external reflection Rₑ of at least 27.0% and an internal reflection Rᵢ of 20.0% or less.
